# EUROPEAN PATENT APPLICATION

(11) **EP 4 622 256 A1**
(43) Date of publication of application: **24.09.2025**
(21) Application number: 24305409.5
(22) Date of filing: 19.03.2024
(51) Int. Cl.: H04N 19/119, G06T 9/00, H04N 19/59, H04N 19/597, H04N 19/70, H04N 21/218, H04N 21/81

(54) **ENCODING AND DECODING METHODS OF MULTIPLANE IMAGE REPRESENTATION AND CORRESPONDING APPARATUSES**

(71) Applicant: InterDigital CE Patent Holdings, SAS, 75017 Paris (FR)
(72) Inventor: DOYEN, Didier, 35510 CESSON-SEVIGNE (FR); FRANCOIS, Edouard, 35890 BOURG DES COMPTES (FR); DE LAGRANGE, Philippe, 35830 BETTON (FR); THIEBAUD, Sylvain, 35530 NOYAL SUR VILAINE (FR)
(74) Representative: Interdigital

(57) **Abstract**

A decoding method is disclosed. At least one picture is decoded that comprises packed layers of a multiplane image representation wherein a size of at least one layer is reduced with respect to a reference size. Information is decoded describing each layer in terms of size and position in the at least one picture. A multiplane image representation is reconstructed that comprises a plurality of layers based on the decoded at least one picture and the decoded information.

## Description

### TECHNICAL FIELD

At least one of the present embodiments generally relates to a method and an apparatus for encoding and decoding a multiplane image representation.

### BACKGROUND

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction.

### SUMMARY

In one implementation, a MPI representation comprising a plurality of layers is obtained. The plurality of layers may be tiled (a.k.a. packed) into at least one picture (e.g. in a single picture), wherein a size of at least one layer is reduced with respect to a reference size. The tiled picture is encoded. Information is also encoded describing each layer in terms of size and position in the tiled picture. In an example, at least one layer of a Multiplane Image (MPI) representation is subsampled to reduce the total size of the tiled picture that is encoded. In another example, at least one layer of the MPI representation is cropped to reduce the total size of the tiled picture. In another example, at least one layer is cropped and at least one layer is sub-sampled to reduce the total size of the tiled picture. In another example, at least one layer is cropped (e.g., into several areas) and possibly re-organized (e.g., the areas are repositioned). For one layer at least two different areas may be kept after the cropping. In another example, empty parts of the tiled picture are filled implicitly or explicitly, e.g., by modifying the subsampling factor or the cropped area definition. In another example, at least one layer is sub-sampled and one layer is cropped (e.g., into a plurality of areas) and possibly re-organized. For one layer at least two different areas may be kept after the cropping.

### BRIEF DESCRIPTION OF THE DRAWINGS

FIG. 1 illustrates a block diagram of a system within which aspects of the present embodiments may be implemented;
FIG. 2 illustrates a block diagram of an embodiment of a video encoder;
FIG. 3 illustrates a block diagram of an embodiment of a video decoder;
FIG. 4 depicts perspective and orthographic projections;
FIG. 5 depicts two tiled pictures one for texture and one for an opacity map with 16 layers each;
FIG. 6 represents texture and opacity constituent pictures in a side-by-side packing arrangement ;

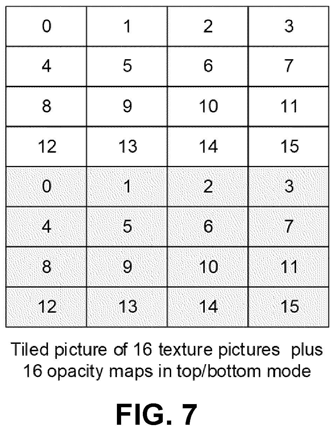

FIG. 7 represents texture and opacity constituent pictures in a top-bottom packing arrangement;

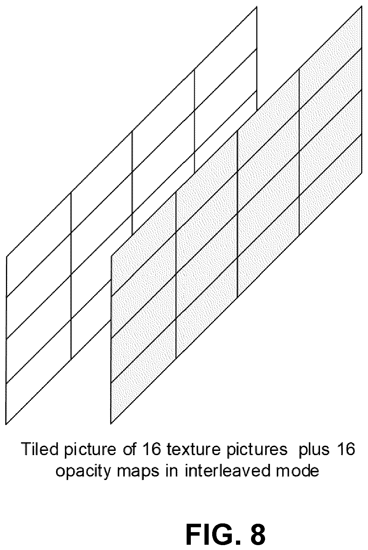

FIG. 8 represents temporally interleaved texture and opacity constituent pictures;
FIG. 9A depicts a flowchart of an encoding method according to an example ;
FIG. 9B depicts a flowchart of a decoding method according to an example ;
FIG. 10 represents one viewpoint of an MPI content called "Train";
FIG. 11 represents the 76 layers of the MPI content called "Train";
FIG. 12 represents an example of side-by-side picture including some sub-sampled layers ;
FIG. 13 represents four layers of the MPI content called "Train";
FIG. 14 represents four cropped layers of the MPI content called "Train";
FIG. 15A represents an example of side-by-side picture including some cropped layers ;
FIG. 15B depicts a position of a cropped layer in an original layer i ;
FIG. 15C depicts a position of a cropped layer in a tiled picture;
FIG. 16A represents four layers of the MPI content called "Train" cropped into several areas ;
FIG. 16B depicts an initial position of a cropped area in a layer and a position of the cropped area in the re-organized layer;
FIG. 16C represents four layers of the MPI content called "Train" cropped and sub-sampled into several areas ;
FIG. 17 represents an example of side-by-side picture including some sub-sampled layers and implicit sub-sampling to remove empty space ; and
FIG. 18 illustrates the addition of layers on border of picture in top-bottom packing arrangement.

### DETAILED DESCRIPTION

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

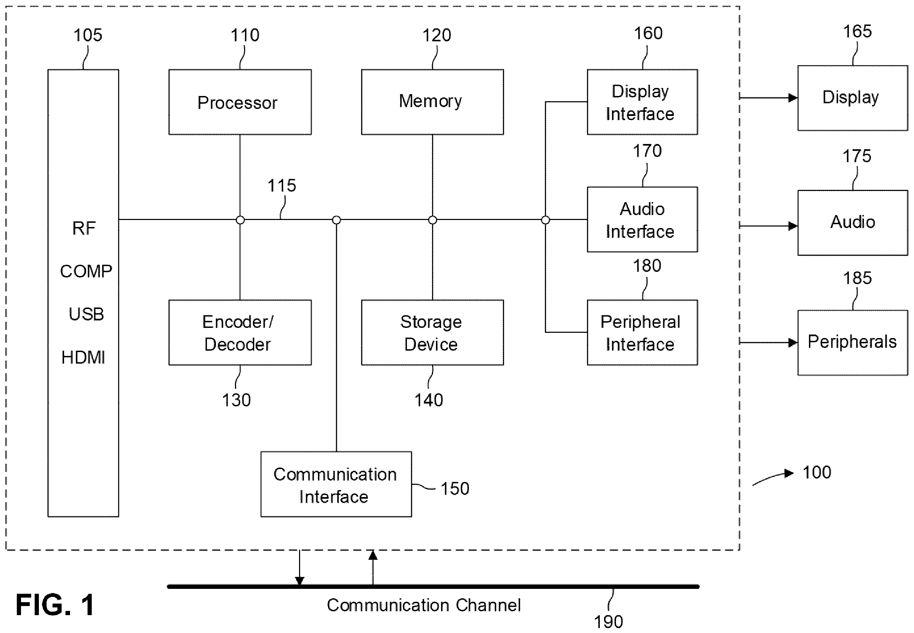

The aspects described and contemplated in this application can be implemented in many different forms. FIGs. 1, 2 and 3 below provide some embodiments, but other embodiments are contemplated and the discussion of FIGs. 1, 2 and 3 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium (e.g. a non-transitory computer readable storage medium) having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "encoded" or "coded" may be used interchangeably, the terms "pixel" and "sample" may be used interchangeably and the terms "image," "picture" and "frame" may be used interchangeably. Usually, but not necessarily, the term "reconstructed" is used at the encoder side while "decoded" is used at the decoder side.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

For the sake of clarity, satisfying, failing to satisfy a condition and configuring condition parameter(s) are described throughout embodiments described herein as relative to a threshold (e.g., greater, or lower than), a (e.g., threshold) value, configuring the (e.g., threshold) value, etc.). For example, satisfying a condition may be described as being above a (e.g., threshold) value, and failing to satisfy a condition (e.g., performance criteria) may be described as being below a (e.g., threshold) value. Embodiments described herein are not limited to threshold-based conditions. Any kind of other condition and parameter(s) (such as e.g., belonging or not belonging to a range of values) may be applicable to embodiments described herein.

The present aspects are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

**FIG. 1** illustrates a block diagram of an example of a system in which various aspects and embodiments can be implemented. System 100 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 100, singly or in combination, may be embodied in a single integrated circuit, multiple ICs, and/or discrete components. For example, in at least one embodiment, the processing and encoder/decoder elements of system 100 are distributed across multiple ICs and/or discrete components. In various embodiments, the system 100 is communicatively coupled to other systems, or to other electronic devices, via, for example, a communications bus or through dedicated input and/or output ports. In various embodiments, the system 100 is configured to implement one or more of the aspects described in this application.

The system 100 includes at least one processor 110 configured to execute instructions loaded therein for implementing, for example, the various aspects described in this application. Processor 110 may include embedded memory, input output interface, and various other circuitries as known in the art. The system 100 includes at least one memory 120 (e.g., a volatile memory device, and/or a non-volatile memory device). System 100 includes a storage device 140, which may include non-volatile memory and/or volatile memory, including, but not limited to, EEPROM, ROM, PROM, RAM, DRAM, SRAM, flash, magnetic disk drive, and/or optical disk drive. The storage device 140 may include an internal storage device, an attached storage device, and/or a network accessible storage device, as non-limiting examples.

System 100 includes an encoder/decoder module 130 configured, for example, to process data to provide an encoded video or decoded video, and the encoder/decoder module 130 may include its own processor and memory. The encoder/decoder module 130 represents module(s) that may be included in a device to perform the encoding and/or decoding functions. As is known, a device may include one or both of the encoding and decoding modules. Additionally, encoder/decoder module 130 may be implemented as a separate element of system 100 or may be incorporated within processor 110 as a combination of hardware and software as known to those skilled in the art.

Program code to be loaded onto processor 110 or encoder/decoder 130 to perform the various aspects described in this application may be stored in storage device 140 and subsequently loaded onto memory 120 for execution by processor 110. In accordance with various embodiments, one or more of processor 110, memory 120, storage device 140, and encoder/decoder module 130 may store one or more of various items during the performance of the processes described in this application. Such stored items may include, but are not limited to, the input video, the decoded video or portions of the decoded video, the bitstream, matrices, variables, and intermediate or final results from the processing of equations, formulas, operations, and operational logic.

In some embodiments, memory inside of the processor 110 and/or the encoder/decoder module 130 is used to store instructions and to provide working memory for processing that is needed during encoding or decoding. In other embodiments, however, a memory external to the processing device (for example, the processing device may be either the processor 110 or the encoder/decoder module 130) is used for one or more of these functions. The external memory may be the memory 120 and/or the storage device 140, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 100 may be provided through various input devices as indicated in block 105. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1, include composite video.

In various embodiments, the input devices of block 105 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 100 to other electronic devices across USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface ICs or within processor 110 as necessary. The demodulated, error corrected, and demultiplexed stream is provided to various processing elements, including, for example, processor 110, and encoder/decoder 130 operating in combination with the memory and storage elements to process the datastream as necessary for presentation on an output device.

Various elements of system 100 may be provided within an integrated housing, Within the integrated housing, the various elements may be interconnected and transmit data therebetween using suitable connection arrangement 115, for example, an internal bus as known in the art, including the I2C bus, wiring, and printed circuit boards.

The system 100 includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

Data is streamed to the system 100, in various embodiments, using a Wi-Fi network such as IEEE 802.11 (IEEE refers to the Institute of Electrical and Electronics Engineers). The Wi-Fi signal of these embodiments is received over the communications channel 190 and the communications interface 150 which are adapted for Wi-Fi communications. The communications channel 190 of these embodiments is typically connected to an access point or router that provides access to outside networks including the Internet for allowing streaming applications and other over-the-top communications. Other embodiments provide streamed data to the system 100 using a set-top box that delivers the data over the HDMI connection of the input block 105. Still other embodiments provide streamed data to the system 100 using the RF connection of the input block 105. As indicated above, various embodiments provide data in a non-streaming manner. Additionally, various embodiments use wireless networks other than Wi-Fi, for example a cellular network or a Bluetooth network.

The system 100 may provide an output signal to various output devices, including a display 165, speakers 175, and other peripheral devices 185. The display 165 of various embodiments includes one or more of, for example, a touchscreen display, an organic light-emitting diode (OLED) display, a curved display, and/or a foldable display. The display 165 can be for a television, a tablet, a laptop, a cell phone (mobile phone), or other device. The display 165 can also be integrated with other components (for example, as in a smart phone), or separate (for example, an external monitor for a laptop). The other peripheral devices 185 include, in various examples of embodiments, one or more of a stand-alone digital video disc (or digital versatile disc) (DVR, for both terms), a disk player, a stereo system, and/or a lighting system. Various embodiments use one or more peripheral devices 185 that provide a function based on the output of the system 100. For example, a disk player performs the function of playing the output of the system 100.

In various embodiments, control signals are communicated between the system 100 and the display 165, speakers 175, or other peripheral devices 185 using signaling such as AV. Link, CEC, or other communications protocols that enable device-to-device control with or without user intervention. The output devices may be communicatively coupled to system 100 via dedicated connections through respective interfaces 160, 170, and 180. Alternatively, the output devices may be connected to system 100 using the communications channel 190 via the communications interface 150. The display 165 and speakers 175 may be integrated in a single unit with the other components of system 100 in an electronic device, for example, a television. In various embodiments, the display interface 160 includes a display driver, for example, a timing controller (T Con) chip.

The display 165 and speaker 175 may alternatively be separate from one or more of the other components, for example, if the RF portion of input 105 is part of a separate set-top box. In various embodiments in which the display 165 and speakers 175 are external components, the output signal may be provided via dedicated output connections, including, for example, HDMI ports, USB ports, or COMP outputs.

The embodiments can be carried out by computer software implemented by the processor 110 or by hardware, or by a combination of hardware and software. As a non-limiting example, the embodiments can be implemented by one or more integrated circuits. The memory 120 can be of any type appropriate to the technical environment and can be implemented using any appropriate data storage technology, such as optical memory devices, magnetic memory devices, semiconductor-based memory devices, fixed memory, and removable memory, as non-limiting examples. The processor 110 can be of any type appropriate to the technical environment, and can encompass one or more of microprocessors, general purpose computers, special purpose computers, and processors based on a multi-core architecture, as non-limiting examples.

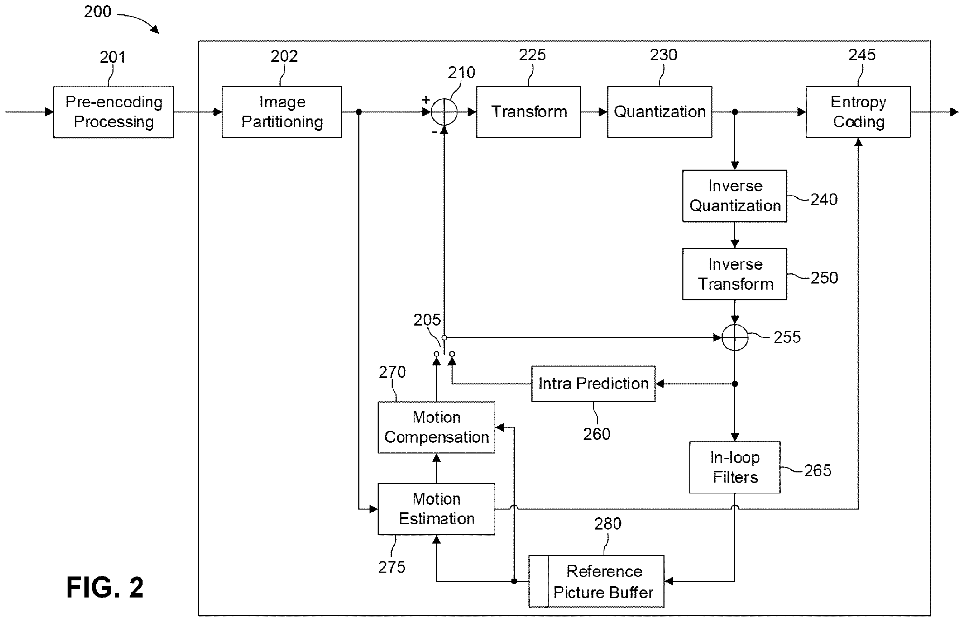

**FIG. 2** illustrates an example video encoder 200, such as a VVC (Versatile Video Coding) encoder. FIG. 2 may also illustrate an encoder in which improvements are made to the VVC standard or an encoder employing technologies similar to VVC.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the pre-processing and attached to the bitstream.

In the encoder 200, a picture is encoded by the encoder elements as described below. The picture to be encoded is partitioned (202) and processed in units of, for example, CTU (Coding Tree Units), CUs (Coding Units). Each unit is encoded using, for example, either an intra or inter mode. When a unit is encoded in an intra mode, it performs intra prediction (260), e.g. using an intra-prediction tool such as Decoder Side Intra Mode Derivation (DIMD). In an inter mode, motion estimation (275) and compensation (270) are performed. The encoder decides (205) which one of the intra mode or inter mode to use for encoding the unit, and indicates the intra/inter decision by, for example, a prediction mode flag. Prediction residuals are calculated, for example, by subtracting (210) the predicted block (a.k.a. prediction block) from the original image block.

The prediction residuals are then transformed (225) into transform coefficients c (a.k.a. prediction residual transform coefficients) which are quantized (230) into quantization indexes *c_{q}* (a.k.a. transform coefficient levels or quantized transform coefficients on the encoder side). The quantization levels (a.k.a. quantization indexes) *c_{q}*, as well as motion vectors and other syntax elements such as the picture partitioning information, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) (a.k.a. scaled) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset)/ALF (Adaptive Loop Filter) filtering to reduce encoding artifacts. The filtered image is stored in a reference picture buffer (280). In-loop filters (265) are thus used to enhance reconstructed images before storing them in the reference picture buffer (280). In-loop filters form a whole family. Among them, deblocking filters (DBF) aim at reducing blocking artifacts occurring along block boundaries. Deblocking filters are usually designed to improve subjective quality, that is, the noticeability of such coding errors by the human psychovisual system. In usual video coding standards such as HEVC and VVC, deblocking filters are predetermined based on coding information (such as prediction modes, motion vectors, transform coefficients) and on local variations across block boundaries. On the other hand, adaptive loop filters (ALF) are learnt at encoder side in order to minimize a mean squared error with respect to source images, then the learned filter weights are encoded into the bitstream. Adaptive loop filters are usually applied at CTU-level, while deblocking filters are applied along block borders.

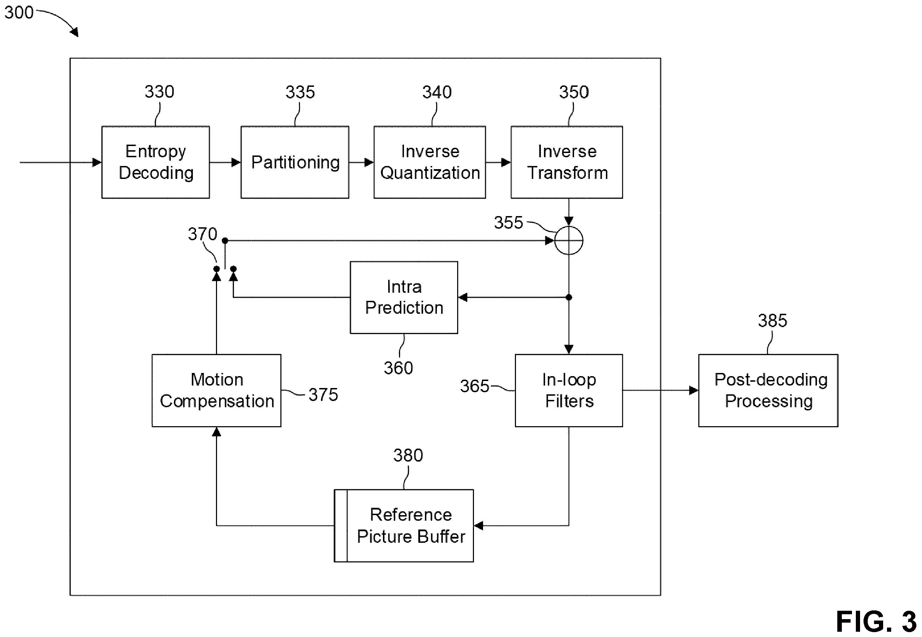

**FIG. 3** illustrates a block diagram of an example video decoder 300. In the decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which can be generated by video encoder 200. The bitstream is first entropy decoded (330) to obtain quantization levels *c_{q}* (a.k.a. transform coefficient levels or quantization levels on the decoder side), prediction modes, motion vectors, and other coded information. The picture partition information indicates how the picture is partitioned. The decoder may therefore divide (335) the picture according to the decoded picture partitioning information. The quantization levels *c_{q}* are de-quantized (340) into reconstructed transform coefficients *cᵣ.* De-quantization is also named scaling. The reconstructed transform coefficients *cᵣ* are inverse transformed (350) to obtain the prediction residuals. Combining (355) the prediction residuals and the predicted block (a.k.a. prediction block), an image block is reconstructed. The predicted block can be obtained (370) from intra prediction (360) or motion-compensated prediction (i.e., inter prediction) (375). In-loop filters (365) are applied to the reconstructed image. The filtered image is stored at a reference picture buffer (380). Note that, for a given picture, the contents of the reference picture buffer 380 on the decoder 300 side is identical to the contents of the reference picture buffer 280 on the encoder 200 side for the same picture.

The decoded picture can further go through post-decoding processing (385), for example, an inverse color transform (e.g., conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream.

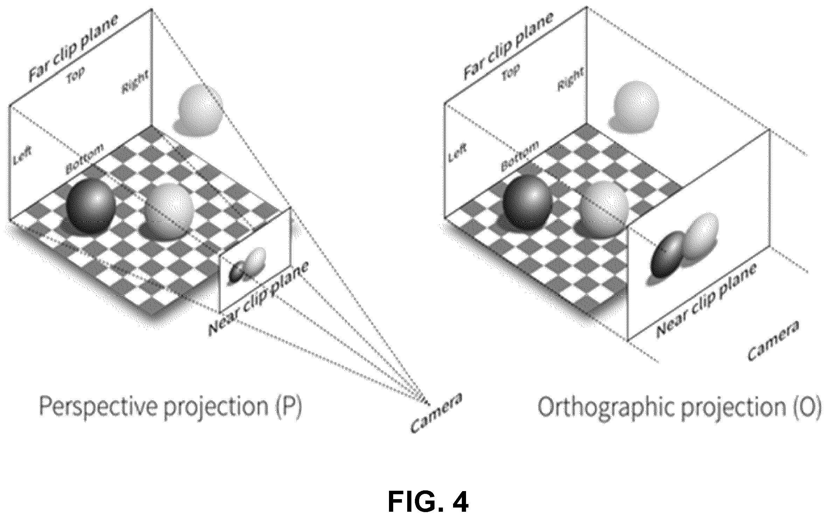

**FIG. 4** depicts perspective and orthographic projections. Multi-Plane Image (MPI) is a layer-based description (a.k.a. representation) of a 3D scene, e.g., resulting from a multi-view scene. A MPI comprises a set of fixed resolution (e.g., in pixels) images (a.k.a. image planes or layers, e.g., including texture and opacity/transparency map) at different depth positions in space (e.g. with respect to a camera position) and a set of metadata gathering parameters like the depth of each image. The difference between MPIs and classic slices of a 3D scene is that MPIs are not an orthographic projection (or cross section) of the scene but a perspective projection. With orthographic projection, layers situated in the background have the same pixel pitch and number of pixels than layers in the foreground, whereas with perspective projection, the number of pixels is the same but the pixel pitch of the layers is linearly increasing with depth. From such an MPI representation, a renderer is able to synthetize any viewpoint of the 3D scene. The renderer may apply a simple accumulation of MPI information in the direction of the view to be interpolated. The opacity/transparency map is well adapted to handle occlusions.

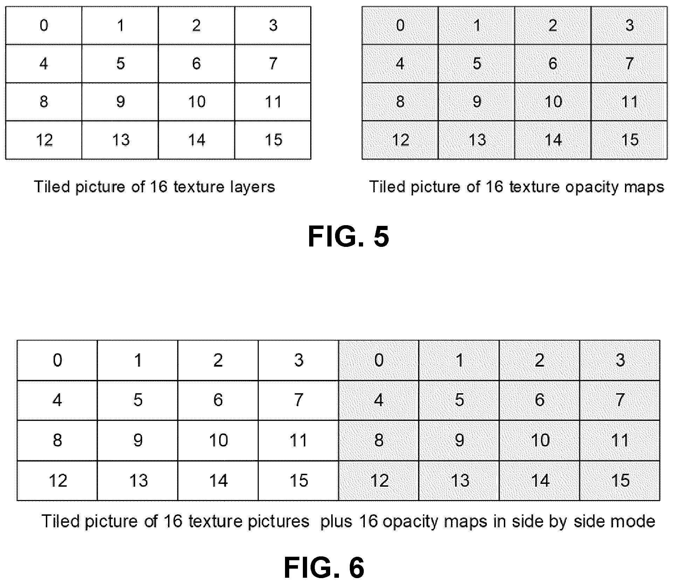

Encoding such an MPI representation is of particular interest. To this aim, MPI layers may be packed (a.k.a. tiled) into at least picture (e.g., one single large picture) that is decodable by a (e.g., single) decoder, e.g., a conventional 2D video decoder. **FIG. 5** depicts two tiled pictures one for the texture and one for the opacity map with 16 layers each.

Multiplane image information (MPII) SEI message has been further defined to enable virtual reality/immersive experiences on existing consumer devices, e.g., using existing video codecs such as HEVC and VVC that were developed for conventional two-dimensional video. A bitstream may be decoded by a conventional 2D video decoder and then the pictures that are output from the ordinary decoding process may be reinterpreted as a packed representation of texture layers and opacity layers using the SEI message. The MPII SEI message specifies the multiplane image (MPI) scene representation information that may be used for view synthesis. Said otherwise, the MPII SEI message conveys information that can be used by a decoder to reconstruct an MPI picture from a decoded output picture containing packed MPI texture and opacity layers. The MPII SEI message supports side-by-side, top-and-bottom, and temporal interleaving packing arrangements. The MPII SEI message can also convey depth information corresponding to each MPI layer. An example, of a MPII SEI message syntax is provided in Table 1.

**Table 1**

| | |
|---|---|
| multiplane_image_information( payloadSize ) { | **Descriptor** |
| **mpii_num_layers_minus1** | ue(v) |
| **mpii_layer_depth_equal_distance_flag** | u(1) |
| if( mpii_layer_depth_equal_distance_flag ) { | |
| depth_rep_info_element( ZNearSign, ZNearExp, ZNearMantissa, ZNearManLen ) | |
| depth_rep_info_element( ZFarSign, ZFarExp, ZFarMantissa, ZFarManLen ) | |
| } else | |
| for( i = 0; i < = mpii_num_layer_minus1; i++ ) | |
| depth_rep_info_element( ZSign[ i ], ZExp[ i ], ZMantissa[ i ], ZManLen[ i ] ) | |
| **mpii_texture_opacity_interleave flag** | u(1) |
| if( mpii_texture_opacity_interleave flag = = 0 ) | |
| **mpii_texture_opacity_arrangement_flag** /* 0: TaB, 1:SbS */ | u(1) |
| **mpii_picture_num_layers_in_height_minus1** | ue(v) |
| } | |

| | |
|---|---|
| mpii_num_layers_minus1 plus 1 specifies the number of texture and opacity layers for MPI representation. mpii_layer_depth_equal_distance_flag equal to 1 indicates the equal distance is used to generate MPI layers and depth parameter for each layer Z[ i ] can be derive using nearest depth value ZNear and farthest depth value ZFar. The depth value for i-th MPI layer Z[ i ] = i * ( ZFar - Znear ) / (mpi_num_layers_minus1 ) + ZNear mpii_layer_depth_equal_distance_flag equal to 0 indicates the depth information for each layer follows next in SEI in the scientific form of sign/exponent/mantissa. In some applications, disparity is used instead of depth (Disparity value D and depth value Z relationship is D = 1/Z). When mpii_layer_depth_equal_distance_flag equal to 1, instead of deriving depth value, the disparity value for i-th MPI layer D[ i ] = i * ( DFar - Dnear ) / (mpi_num_layers_minus1 ) + DNear. mpii_texture_opacity_arrangement_flag equal to 0 indicates decoded output pictures represent texture and opacity constituent pictures in a top-bottom packing arrangement as illustrated in **FIG. 7****.** mpii_texture_opacity_arrangement_flag equal to 1 indicates decoded output pictures represent texture and opacity constituent pictures in a side-by-side packing arrangement as illustrated in **FIG. 6****.** mpii_texture_opacity_interleave_flag equal to 1 indicates decoded output pictures correspond to temporally interleaved texture and opacity constituent pictures in output order as illustrated in **FIG. 8****.** mpii_texture_opacity_interleave_flag equal to 0 indicates decoded output pictures correspond to spatially packed texture and opacity constituent pictures as illustrated in FIGs 6 and 7. mpii_picture_num_layers_in_height_minus1 plus 1 specifies the number of spatially packed layers in height, e.g., for picture 0 and picture 1. The variable hLayers is set equal to mpii_picture_num_layers_in_height_minus1 + 1 and the variable wLayers is set equal to (mpii_num_layers_minus1 + 1) / hLayers. Thus, hLayers represents the number of layers in height and wLayers represents the number of layer in width. | |

The size of the layers is fixed and depends on the values of hLayers and wLayers. Given the complete picture is of size W * H, the layers dimension may be obtained as follows: Wlayer = W / wLayers and Hlayer = H / hLayers.

In a case where there is no constraint on hLayers and the number of layers (noted Nlayers = mpii_num_layers_minus1 + 1), it is not guaranteed that (Wlayer * wLayers ) is equal to W, and ( Hlayer * hLayers ) is equal to H. Consequently, it is possible to end-up with a tiled picture with empty right and bottom borders of width ( W - ( Wlayer * wLayers ) ) and height (H - ( Hlayer * hLayers)). It may also be noted that depending on the values of hLayers and the number of layers, there may be less layers than the actual number of layers of the MPI representation. For instance, if number of layers of the MPI representation is 17 and hLayers is 4, wLayers is equal to 4 (e.g., rounded integer value of 4.25), which leads to hLayers * wLayers = 16, which is less than the number of layers, i.e. 17.

The SEI message of Table 1 indicates the number of layers and describes the way the different layers of the MPI content are tiled (e.g., packed) together into one single picture or into two temporally interleaved pictures. Having a single (e.g., large) picture or interleaved pictures including all the layers of a MPI content makes it possible to use already deployed 2D video decoders. However, the above method is limited by the maximum size of a picture that already deployed decoders can handle (e.g., process). For instance, a 4K picture (e.g., a picture of 3860 by 2160 pixels) is the upper limit most of the available AVC, HEVC or VVC devices may support today. With such a limit, a 16 layers MPI of 1K pictures (e.g., of 960 by 540 pixels) is the maximum that can be handled. The number of layers and the resolution of each layer are critical parameters for a MPI renderer to correctly render a 3D scene. To improve the user experience provided by such MPI content, it is interesting to either increase the number of layers and/or increase the resolution of pictures per layer.

A method is thus disclosed that makes it possible to enhance the user experience by increasing the number of layers while maintaining (or even increasing) the resolution of pictures per layer, and the complete picture resolution.

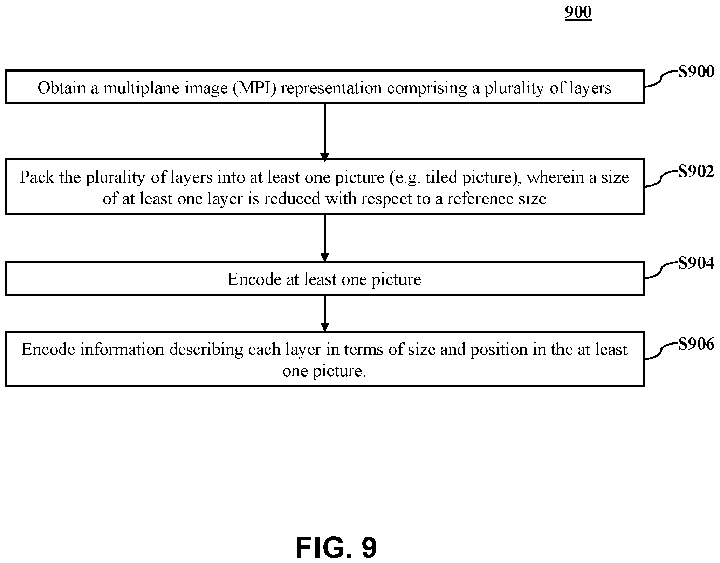

FIG. 9A depicts a flowchart of an encoding method 900 according to an example.

At S900, a multiplane image (MPI) representation comprising a plurality of layers is obtained.

At S902, the plurality of layers are packed (i.e., combined) into at least one picture (e.g. in a single picture), wherein a size of at least one layer is reduced with respect to a reference size. The reduced size may be obtained by sub-sampling the at least one layer and/or by cropping the at least one layer, e.g. based on the active pixels.

At S904, the at least one picture is encoded, e.g., by the encoder depicted on FIG. 2.

At S906, information (e.g., multiplane image information) is encoded that describes each layer in terms of size and position in the tiled picture.

In an example, the information comprises a reference size, a number of layers, and, for each layer, at least one subsampling factor and information representative of a position (e.g., of a positioning) of the layer in the tiled picture.

In another example, the information comprises the reference size, the number of layers, and, for each layer, one subsampling factor in vertical direction and one subsampling factor in horizontal direction and information representative of a position (e.g., of a positioning) of the layer in the tiled picture.

In another example, the information comprises a number of layers, and, for each layer, a size of the cropped layer and information representative of a position (e.g., of a positioning) of the cropped layer in the original layer and a position of the cropped layer in the tiled picture. In another example, the information comprises a number of layers, and, for each layer, one or two subsampling factors (e.g., one for both directions or one in vertical direction and one in horizontal direction), a size of the cropped layer and information representative of a position (e.g., of a positioning) of the cropped layer in the original layer and a position of the cropped layer in the tiled picture.

In another example, the information comprises a number of layers and, for each layer, a number of cropped areas, a size and information representative of an initial position and of a reorganized position of each area in the layer, and information representative of a position (e.g., of a positioning) of the layer in the tiled picture.

In another example, the information comprises a number of layers and, for each layer, one or two subsampling factors of the layer, a number of cropped (e.g., selected) areas, a size and information representative of an initial position and of a reorganized position of each area in the layer and information representative of a position (e.g., of a positioning) of the layer in the tiled picture. The reorganized position is the position of an area in the reorganized layer.

The additional information may be encoded using a SEI message. Various examples of such messages are provided below.

FIG. 9B depicts a flowchart of a decoding method 1000 according to an example.

At S1000, at least one picture (e.g., a tiled picture) is decoded, e.g., by the decoder of FIG. 3. The at least one picture comprises packed layers of a multiplane image representation, wherein a size of at least one layer is reduced with respect to a reference size.

At S1002, information is decoded that describes each layer in terms of size and position in the at least one picture.

At S1004, the multiplane image representation comprising the plurality of layers is reconstructed based on the decoded at least one image and the decoded information. For example, in case of sub-sampling on the encoder side, a layer is up-sampled using the sub-sampling factor mentioned in the information decoded at S1002. In case of cropping, the cropped layer may be repositioned in the layer of the multiplane image representation according to the position mentioned in the information decoded at S1002.

In all examples, the position of a layer or of a cropped area may be the position of the top-left pixel of this layer or cropped area. However, the present principles are not limited to the top-left pixel. Indeed, the position may be defined with respect to another pixel, e.g., the center pixel, bottom right, etc. The positions are for example defined in pixels. However, the position may be defined in another unit.

In one example, at least one layer is sub-sampled to reduce the total size of the tiled picture. A possible criterion for deciding to subsample a layer may be when the layer contains a low number of active pixels. A non-active pixel is a pixel with opacity equal to 0 (e.g., pixel opacity being derived from the opacity map). For most of the layers in a MPI content there are areas where opacity is equal to zero (transparent areas). One or more layers can be defined as less significative if for instance there is less than a given percentage of pixels that are active. Other criteria can be defined to signal a layer as less significative such as if active pixels are in non-salient areas e.g., (based on saliency map information) or if active pixels correspond to areas in high movement or if they correspond to low frequency texture. For such layers, subsampling can be interesting to reduce the corresponding size of this layer in the tiled picture.

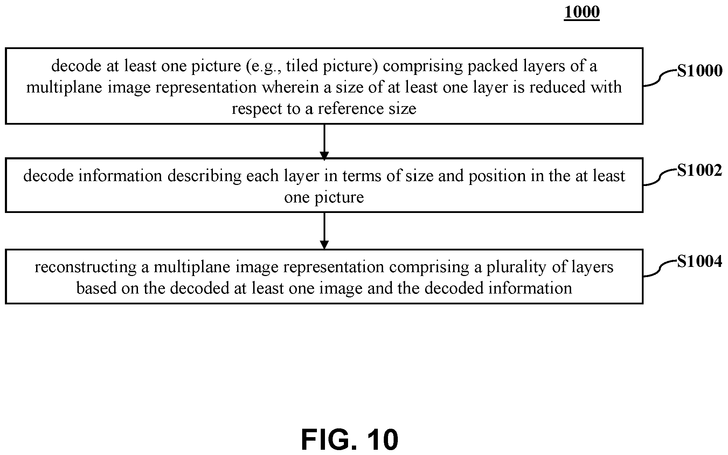

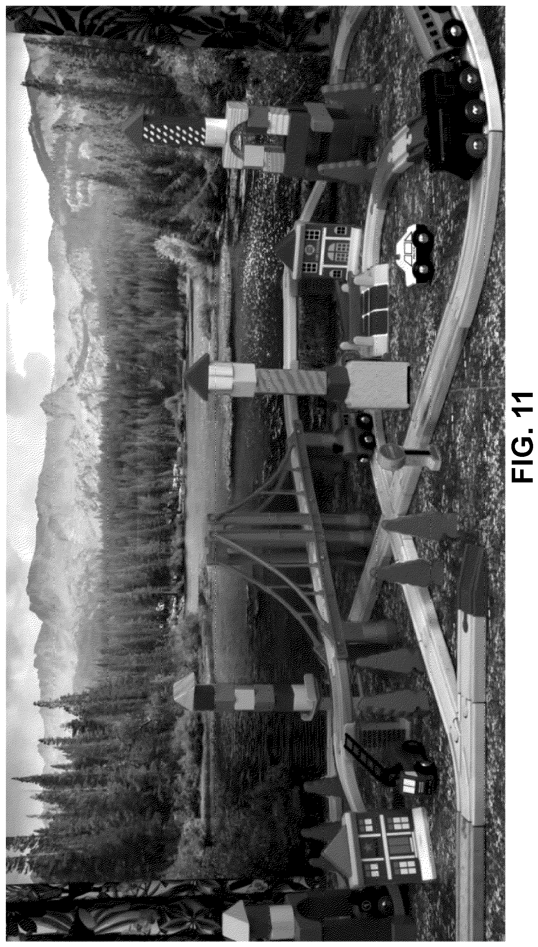

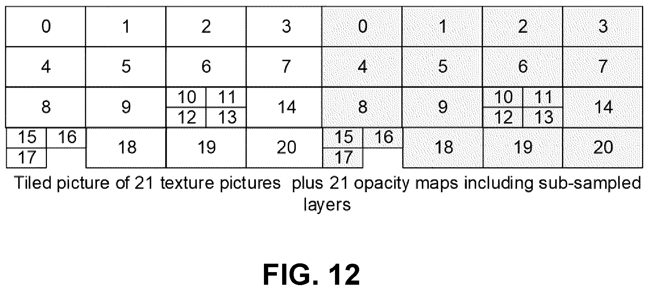

**FIG. 10** represents one viewpoint of an MPI content called "Train" and **FIG. 11** represents the 76 layers of this MPI content. By construction of a MPI content, some of the layers may have very few active pixels. Some of the layers can be easily subsampled without jeopardizing the quality of the future rendering. **FIG. 12** represents an example of side-by-side picture including some sub-sampled layers. In this example, up to 21 layers are tiled compared to 16 without subsampling.

The SEI message of Table 1 may thus be modified to comprise information on the sub-sampled layers. In an example, the SEI message may comprise a reference size of a layer (e.g., defined in pixels), a number of layers and, for each layer, a subsampling factor (e.g., with respect to the reference size) and a position (e.g., positioning) of the layer (e.g., of the sub-sampled layer) in the tiled picture. The reference size may be a size of a layer without any sub-sampling. An example is provided in Table 2. The differences with the message of Table 1 are indicated in Italics.

**Table 2**

| | |
|---|---|
| multiplane_image_information( payloadSize ) { | **Descriptor** |
| | |
| **mpii_num_layers_minus1** | ue(v) |
| **mpii_layer**_**depth_equal_distance_flag** | u(1) |
| if( mpii_layer_depth_equal_distance_flag ) { | |
| depth_rep_info_element( ZNearSign, ZNearExp, ZNearMantissa, ZNearManLen ) | |
| depth_rep_info_element( ZFarSign, ZFarExp, ZFarMantissa, ZFarManLen ) | |
| } else | |
| for( i = 0; i < = mpii_num_layer_minus1; i++ ) | |
| depth_rep_info_element( ZSign[ i ], ZExp[ i ], ZMantissa[ i ], ZManLen[ i ] ) | |
| **mpii_texture_opacity_interleave flag** | u(1) |
| if( mpii_texture_opacity_interleave flag = = 0 ) | |
| **mpii_texture_opacity_arrangement_flag** /* 0: TaB, 1:SbS */ | u(1) |
| ***mpii_layer_subsampling_flag*** | *u(l)* |
| *if( mpii_layer_subsampling flag* = = *0)* | |
| **mpii_picture_num_layers_in_height_minus1** | ue(v) |
| *else* | |
| ***mpii_reference_size_layer_x*** | *ue(v)* |
| ***mpii_reference_size_layer_y*** | *ue(v)* |
| *for( i* = *0; i* < = *mpii_num*_*layer_minus1; i*++ *) {* | |
| ***mpii_subsampling_factor[i]*** | *u(4)* |
| ***mpii_layer_position_intiled_picture_x[i]]*** | *ue(v)* |
| ***mpii_layer_position_intiled_picture_y[i]*** | *ue(v)* |
| } | |
| } | |
| mpii_layer subsampling_flag equal to 0 indicates there is no layer sub-sampled. mpii_layer subsampling_flag equal to 1 indicates at least one layer is subsampled by a factor defined for each layer. mpii_reference_size_layer_x specifies the size in pixels of the reference layer in horizontal dimension, which is a reference size in horizontal dimension. mpii_reference_size_layer_y specifies the size in pixels of the reference layer in vertical dimension, which is a reference size in vertical dimension. mpii_subsampling_factor[i] specifies the sub-sampling factor of the i-th layer. Thus, the sub-sampling factor is defined with respect to the reference sizes. mpii_layer_position_intiled_picture_x[i] specifies the horizontal position (e.g., defined in pixels) of the i-th layer in the tiled picture (e.g., the horizontal position of the top left corner of the i-th layer in the tiled picture). mpii_layer_position_intiled_picture_y[i] specifies the vertical position (e.g., defined in pixels) of the i-th layer in the tiled picture (e.g., the vertical position of the top left corner of the i-th layer in the tiled picture). | |

In a variant, a subsampling factor may be indicated for each horizontal and vertical directions, e.g., they may be different. In such a configuration, the SEI message may comprise a reference size of a layer in pixels, a number of layers, and, for each layer, a subsampling factor in horizontal direction, a subsampling factor in vertical direction and a position (e.g.; a positioning) of the layer (e.g., of the sub-sampled layer) in the tiled picture. An example is provided in Tables 3 and 4. The differences with the message of Table 1 are indicated in Italics.

**Table 3**

| | |
|---|---|
| multiplane_image_information( payloadSize ) { | **Descriptor** |
| | |
| **mpii_num_layers_minus1** | ue(v) |
| **mpii_layer_depth_equal_distance_flag** | u(1) |
| if( mpii_layer_depth_equal_distance_flag ) { | |
| depth_rep_info_element( ZNearSign, ZNearExp, ZNearMantissa, ZNearManLen ) | |
| depth_rep_info_element( ZFarSign, ZFarExp, ZFarMantissa, ZFarManLen ) | |
| } else | |
| for( i = 0; i < = mpii_num_layer_minus1; i++ ) | |
| depth_rep_info_element( ZSign[ i ], ZExp[ i ], ZMantissa[ i ], ZManLen[ i ] ) | |
| **mpii_texture_opacity_interleave flag** | u(1) |
| if( mpii_texture_opacity_interleave flag = = 0 ) | |
| **mpii_texture_opacity_arrangement_flag** /* 0: TaB, 1:SbS */ | u(1) |
| ***mpii_layer_subsampling flag*** | u(j) |
| *if( mpii_layer_subsampling flag* = = *0)* | |
| **mpii_picture_num_layers_in_height_minus1** | ue(v) |
| *else* | |
| ***mpii_reference_size_layer_x*** | *ue(v)* |
| ***mpii_reference_size_layer_y*** | *ue(v)* |
| *for( i* = *0; i* < = *mpii_num*_*layer_minus1; i*++ *) {* | |
| ***mpii_subsampling_factor_x[i]*** | *u(4)* |
| ***mpii_subsampling_factor_y[i]*** | *u(4)* |
| ***mpii_layer_position_intiled_picture_x [i]*** | *ue(v)* |
| ***mpii_layer_position_intiled_picture_x [i]*** | *ue(v)* |
| } | |
| } | |

| | |
|---|---|
| mpii_subsampling_factor_x[i] specifies the sub-sampling factor of the i-th layer in horizontal direction. mpii_subsampling_factor_y[i] specifies the sub-sampling factor of the i-th layer in vertical direction. | |

The subsampling factors may be defined with respect to the reference size.

In another example, a syntax element (e.g., mpii_layer_subsampling_horizontal flag) is added to indicate whether a single sub-sampling factor is encoded for both direction or whether one sub-sampling factor is encoded for each direction.

**Table 4**

| | |
|---|---|
| multiplane_image_information( payloadSize ) { | **Descriptor** |
| | |
| **mpii_num_layers_minus1** | ue(v) |
| **mpii_layer_depth_equal_distance_flag** | u(1) |
| if( mpii_layer_depth_equal_distance_flag ) { | |
| depth_rep_info_element( ZNearSign, ZNearExp, ZNearMantissa, ZNearManLen ) | |
| depth_rep_info_element( ZFarSign, ZFarExp, ZFarMantissa, ZFarManLen ) | |
| } else | |
| for( i = 0; i < = mpii_num_layer_minus1; i++ ) | |
| depth_rep_info_element( ZSign[ i ], ZExp[ i ], ZMantissa[ i ], ZManLen[ i ] ) | |
| **mpii_texture_opacity_interleave flag** | u(1) |
| if( mpii_texture_opacity_interleave flag = = 0 ) | |
| **mpii_texture_opacity_arrangement_flag** /* 0: TaB, 1:SbS */ | u(1) |
| ***mpii_layer_subsampling_flag*** | u(j) |
| *if( mpii_layer_subsampling flag* = = *0)* | |
| **mpii_picture_num_layers_in_height_minus1** | ue(v) |
| *else* | |
| ***mpii_layer_subsampling_horizontal_flag*** | u(j) |
| ***mpii_reference_size_layer_x*** | *ue(v)* |
| ***mpii_reference_size_layer_y*** | *ue(v)* |
| *for( i* = *0; i* < = *mpii_num*_*layer_minus1; i*++ *) {* | |
| *if( mpii_layer_subsampling_horizontal flag* = = *0) {* | |
| ***mpii_subsampling_factor[i]*** | *u(4)* |
| ***.mpii_layer_position_intiled_picture_x[i]*** | *ue(v)* |
| ***mpii_layer_position_intiled_picture_y[i]*** | *ue(v)* |
| *}* | |
| *else* | |
| *if( mpii_layer_subsampling_horizontal flag* = = *1) {* | |
| ***mpii_subsampling_factor_x[i]*** | *u(4)* |
| ***mpii_subsampling_factor_y[i]*** | *u(4)* |
| ***mpii_layer_position_intiled_picture_x [i]*** | *ue(v)* |
| ***mpii_layer_position_intiled_picture_x [i]*** | *ue(v)* |
| *}* | |
| } | |
| } | |

| | |
|---|---|
| mpii_layer subsampling_horizontal_flag equal to 0 indicates the horizontal subsampling factor is the same as the vertical one. mpii_layer subsampling_horizontal_flag equal to 1 indicates that two subsampling factors are present, one for each direction, i.e., the horizontal subsampling factor can be different from the vertical one. | |

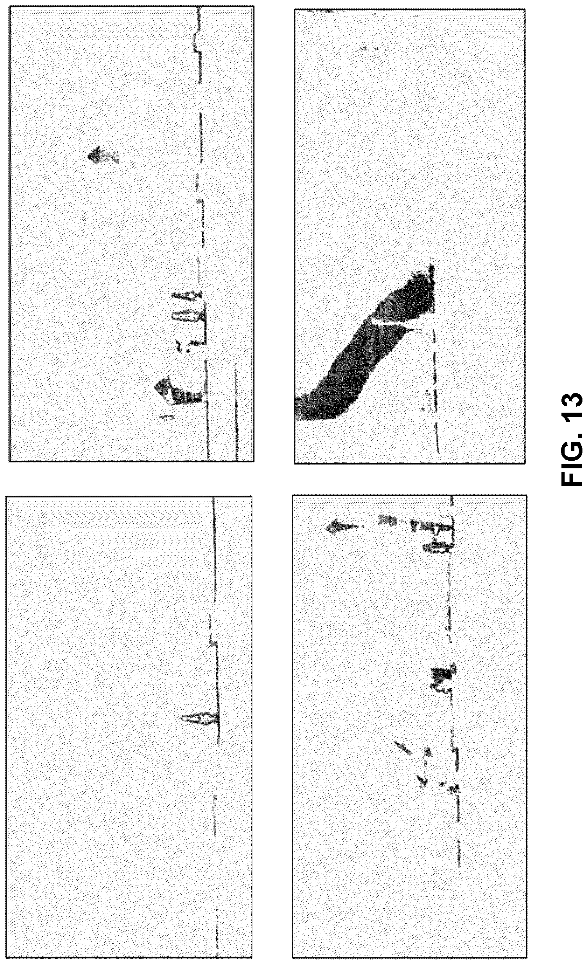

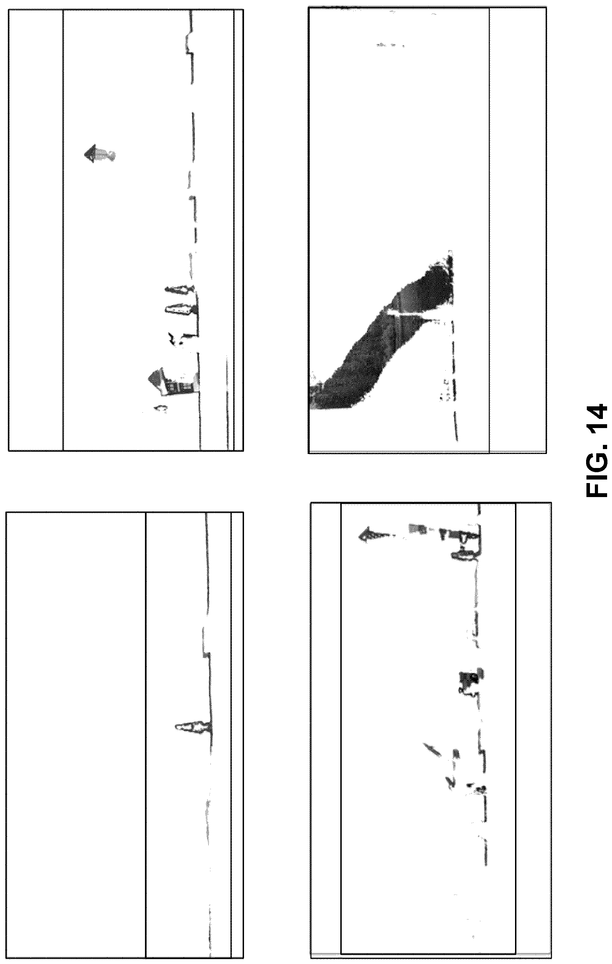

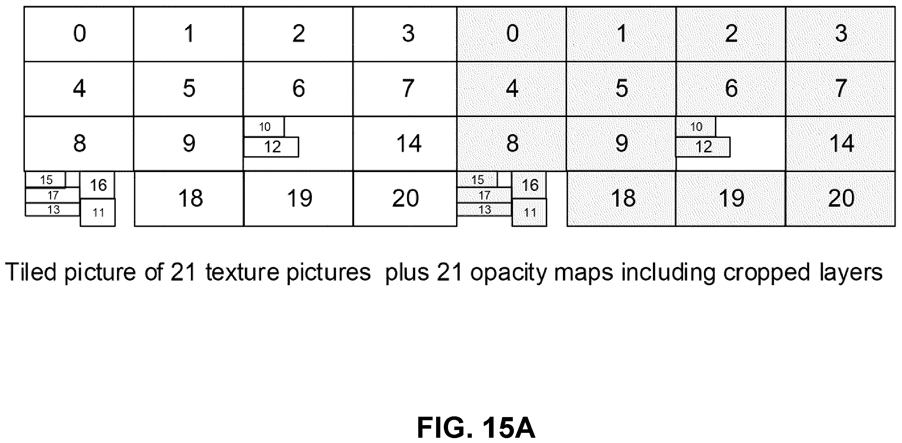

In another example, at least one layer is cropped to reduce the total size of the tiled picture. A layer may be cropped by keeping only its active parts/areas. Most of the layers in a MPI content comprise areas where there is no active pixel, e.g., corresponding to an absence of information at this depth in the scene. For the given MPI content "Train", four layers are illustrated in **FIG. 13****,** the significative part of the scene in each layer is not spread on the whole picture. It is only limited to some areas. It is then possible to crop these layers, e.g., by keeping only the area where active pixels are. **FIG. 14** illustrates the possible crop for these layers, the crop is corresponding to a rectangular shape which can be defined with two dimensions in X and Y. The area is strongly reduced, and these cropped layers can be tiled in the tiled (a.k.a. as packed) picture as illustrated in **FIG. 15A****.** In an example, the size of the areas or cropped layers is a multiple of 16 or32. The SEI message may thus be modified to comprise information on the cropped layers. In an example, the SEI message may comprise a number of layers and, for each layer, a size of the cropped layer and a position (e.g., a positioning) of the cropped layer in the original layer and a position of the cropped layer in the tiled picture. An example is provided in Table 5. The differences with the message of Table 1 are indicated in Italics.

**Table 5**

| | |
|---|---|
| multiplane_image_information( payloadSize ) { | **Descriptor** |
| | |
| **mpii_num_layers_minus1** | ue(v) |
| **mpii_layer_depth_equal_distance_flag** | u(1) |
| if( mpii_layer_depth_equal_distance_flag ) { | |
| depth_rep_info_element( ZNearSign, ZNearExp, ZNearMantissa, ZNearManLen ) | |
| depth_rep_info_element( ZFarSign, ZFarExp, ZFarMantissa, ZFarManLen ) | |
| } else | |
| for( i = 0; i < = mpii_num_layer_minus1; i++ ) | |
| depth_rep_info_element( ZSign[ i ], ZExp[ i ], ZMantissa[ i ], ZManLen[ i ] ) | |
| **mpii_texture_opacity_interleave flag** | u(1) |
| if( mpii texture_opacity_interleave flag = = 0 ) | |
| **mpii_texture_opacity_arrangement_flag** /* 0: TaB, 1:SbS */ | u(1) |
| ***mpii*_*layer_cropping flag*** | *u(j)* |
| *if( mpii_layer_cropping flag* = = *0)* | |
| **mpii_picture_num_layers_in_height_minus1** | ue(v) |
| *else* | |
| *for( i* = *0; i* < = *mpii_num*_*layer_minus1; i*++ *) {* | |
| ***mpii_cropped_position_inlayer_x[i]*** | *ue(v)* |
| ***mpii_cropped_position_inlayer_y[i]*** | *ue(v)* |
| ***mpii_cropped_size_layer_x[i]*** | *ue(v)* |
| ***mpii_cropped_size_layer_y[i]*** | *ue(v)* |
| ***mpii_layer_position_intiled_picture_x[i]*** | *ue(v)* |
| ***mpii_layer_position_intiled_picture_y[i]*** | *ue(v)* |
| } | |
| } | |

| | |
|---|---|
| mpii_layer cropping_flag equal to 0 indicates there is no layer cropped. mpii_layer cropping_flag equal to 1 indicates at least one layer is cropped and the size and the positioning of each layer is defined. mpii_cropped_position_inlayer_x[i] specifies the position in the horizontal direction of the i-th cropped layer (e.g., of the top-left pixel of the i-th cropped layer) in the original layer. The position may be indicated in pixels. mpii_cropped_position_inlayer_y[i] specifies the position in the vertical direction of the i-th cropped layer (e.g., of the top-left pixel of the i-th cropped layer) in the original layer. The position may be indicated in pixels. The original layer is the layer before any cropping. mpii_cropped_size_layer_x[i] specifies the size in pixels of the i-th cropped layer in horizontal dimension. mpii_cropped_size_layer_y[i] specifies the size in pixels of the i-th cropped layer in vertical dimension. mpii_layer_position_intiled_picture_x[i] specifies the position in horizontal direction (e.g., of the top left corner) of the i-th cropped layer in the tiled picture. mpii_layer_position_intiled_picture_y[i] specifies the position in vertical direction (e.g., of the top left corner) of the i-th cropped layer in the tiled picture. | |

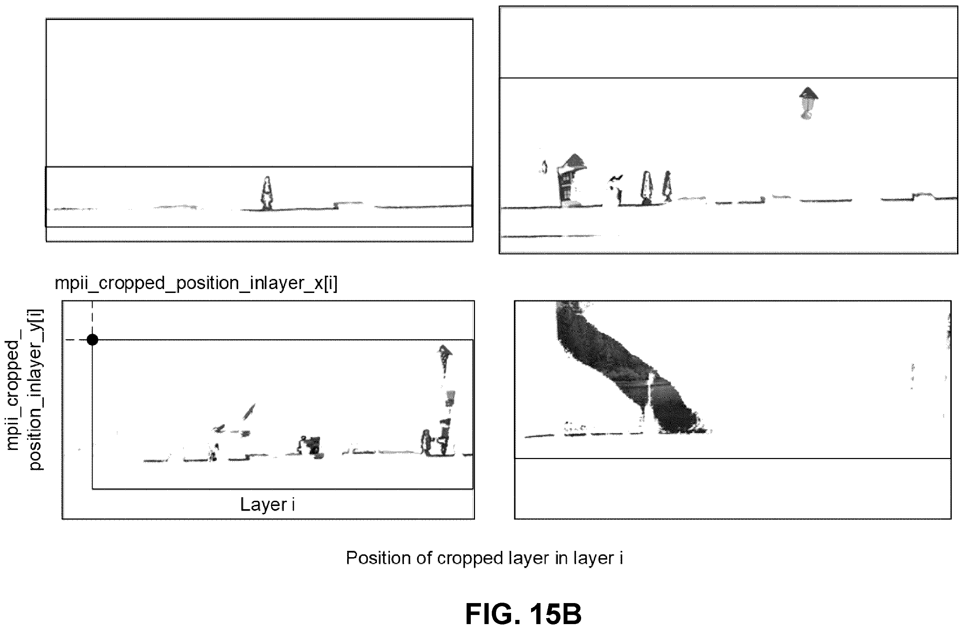

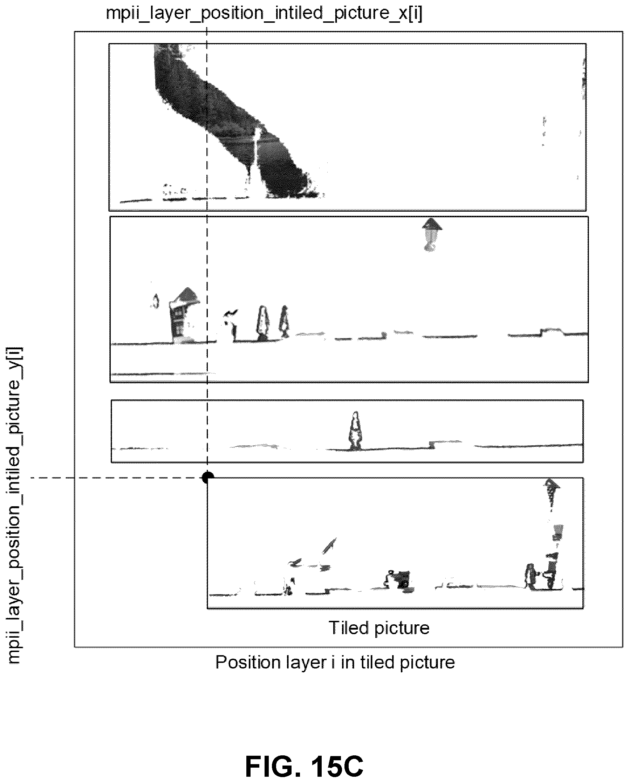

FIG. 15B depicts the position of the cropped layer in the original layer and FIG. 15C illustrates the position of the cropped layer in the tiled picture.

In yet another example, at least one layer is cropped and at least one layer is sub-sampled to reduce the total size of the tiled picture. It is proposed to reduce the size of layers of lower interest by applying a subsampling factor to these layers. It is also proposed to reduce the size of some layers by applying a crop to eliminate non significative part of these layers. Both crop and subsampling can be applied to the same layer.

The SEI message may thus be modified to comprise information on the cropped and/or subsampled layers. In an example, the SEI message may comprise a number of layers and, for each layer, a subsampling factor of the layer (or two subsampling factors, e.g. one for each direction), a cropped size of the layer and a position (e.g., a positioning) of the layer in original layer and a position of the cropped layer in the tiled picture. An example is provided in Table 6. The differences with the message of Table 1 are indicated in Italics.

**Table 6**

| | |
|---|---|
| multiplane_image_information( payloadSize ) { | **Descriptor** |
| | |
| **mpii_num_layers_minus1** | ue(v) |
| **mpii_layer_depth_equal_distance_flag** | u(1) |
| if( mpii_layer_depth_equal_distance_flag) { | |
| depth_rep_info_element( ZNearSign, ZNearExp, ZNearMantissa, ZNearManLen ) | |
| depth_rep_info_element( ZFarSign, ZFarExp, ZFarMantissa, ZFarManLen ) | |
| } else | |
| for( i = 0; i < = mpii_num_layer_minus1; i++ ) | |
| depth_rep_info_element( ZSign[ i ], ZExp[ i ], ZMantissa[ i ], ZManLen[ i ] ) | |
| **mpii_texture_opacity_interleave flag** | u(1) |
| if( mpii texture_opacity_interleave flag = = 0 ) | |
| **mpii_texture_opacity_arrangement_flag** /* 0: TaB, 1:SbS */ | u(1) |
| ***mpii_layer_cropping flag*** | *u(1)* |
| ***mpii_layer_subsampling flag*** | *u(1)* |
| *if( (mpii_layer_cropping flag* = = *0)* & *(mpii_layer_subsampling* ==*0 ))* | |
| **mpii_picture_num_layers_in_height_minus1** | ue(v) |
| *Else if ((mpii_layer_cropping flag* = = *1)* & *(mpii_layer_subsampling* ==*0 )) {* | |
| *for( i* = *0; i* < = *mpii_num*_*layer_minus1; i*++ *) {* | |
| ***mpii_cropped_position_inlayer_x[i]*** | *ue(v)* |
| ***mpii_cropped_position_inlayer_y[i]*** | *ue(v)* |
| ***mpii_cropped_size_layer_x[i]*** | *ue(v)* |
| ***mpii_cropped_size_layer_y[i]*** | *ue(v)* |
| ***mpii_layer_position_intiled_picture x[i]*** | *ue(v)* |
| ***mpii_layer_position_intiled_picture y[i] }*** | *ue(v)* |
| ***}*** | |
| *Else if ((mpii_layer_cropping flag* == *0)* & *(mpii_layer_subsampling* ==*1 )) {* | |
| ***mpii_reference_size_layer_x*** | *ue(v)* |
| ***mpii_reference_size_layer_y*** | *ue(v)* |
| *for( i* = *0; i* < = *mpii_num*_*layer_minus1; i*++ *) {* | |
| ***mpii_subsampling_factor[i]*** | *u(4)* |
| ***mpii_layer_position_intiled_picture_x[i]*** | *ue(v)* |
| ***mpii_layer_position_intiled_picture_y[i] }*** | *ue(v)* |
| ***}*** | |
| *Else {* | |
| *for( i* = *0; i* < = *mpii_num*_*layer_minus1; i*++ *) {* | |
| ***mpii_subsampling_factor[i]*** | *u(4)* |
| ***mpii_cropped_position_inlayer_x[i]*** | *ue(v)* |
| ***mpii_cropped_position_inlayer_y[i]*** | *ue(v)* |
| ***mpii_cropped_size_layer_x[i]*** | *ue(v)* |
| ***mpii_cropped_size_layer_y[i]*** | *ue(v)* |
| ***mpii_layer_position_intiled_picture_x[i]*** | *ue(v)* |
| ***mpii_layer_position_intiled_picture_y[i]** }* | *ue(v)* |
| ***}*** | |

| | |
|---|---|
| mpii_layer subsampling_flag equal to 0 indicates there is no layer sub-sampled. mpii_layer subsampling_flag equal to 1 indicates at least one layer is subsampled by a factor defined for each layer. mpii_layer cropping_flag equal to 0 indicates there is no layer cropped. mpii_layer cropping_flag equal to 1 indicates at least one layer is cropped and the size and the positioning of each layer is defined. mpii_subsampling_factor[i] specifies the sub-sampling factor of the i-th layer. mpii_cropped_position_inlayer_x[i] specifies the position in pixels in the horizontal direction in the original layer of the i-th cropped layer. mpii_cropped_position_inlayer_y[i] specifies the position in pixels in the vertical direction in the original layer of the i-th cropped layer. mpii_cropped_size_layer_x[i] specifies the size in pixels of the i-th cropped layer in horizontal dimension. mpii_cropped_size_layer_y[i] specifies the size in pixels of the i-th cropped layer in vertical dimension. mpii_layer_position_intiled_picture_x[i] specifies the position in horizontal of the top left corner of the i-th layer in the tiled picture. mpii_layer_position_intiled_picture_y[i] specifies the position in vertical of the top left corner of the i-th layer in the tiled picture. | |

The example of Table 6 may be combined with the examples of Tables 3 and 4, wherein a subsampling factor may be indicated for each horizontal and vertical directions.

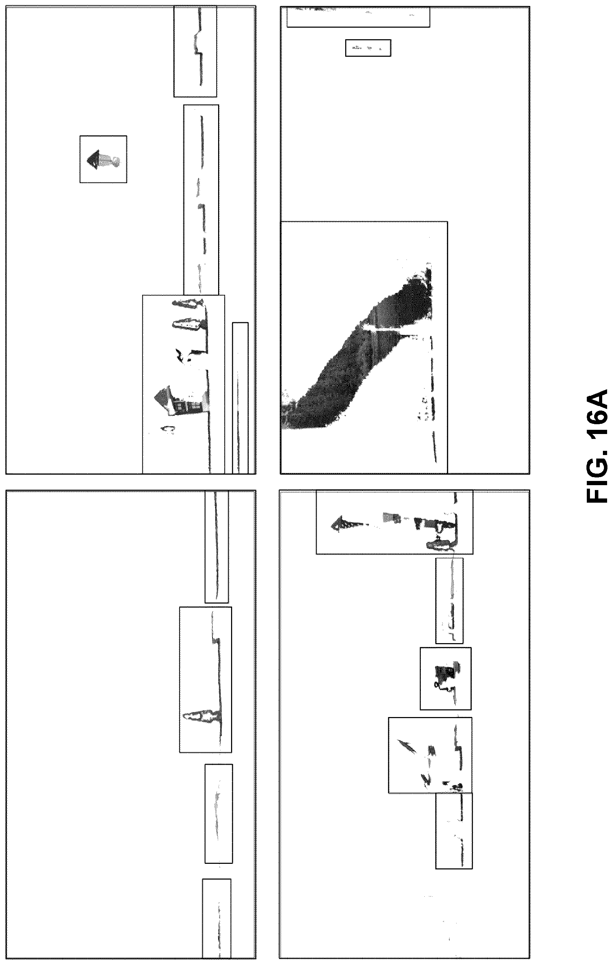

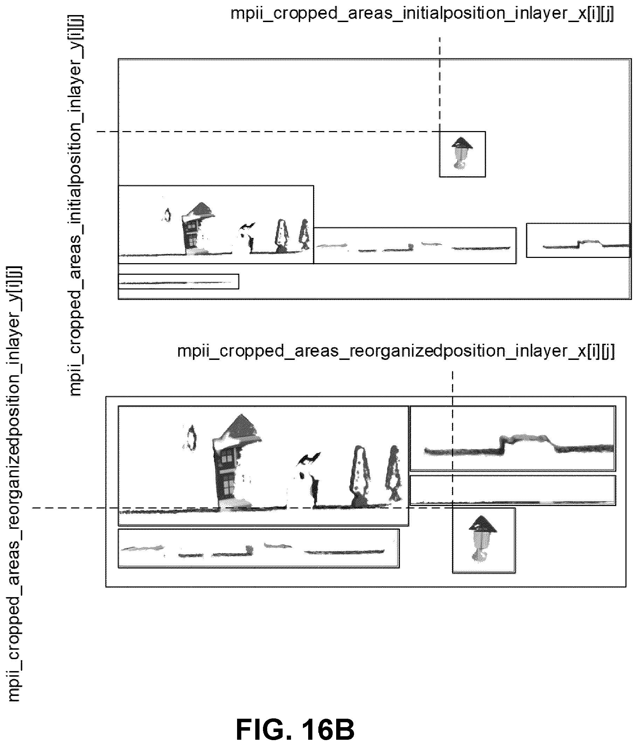

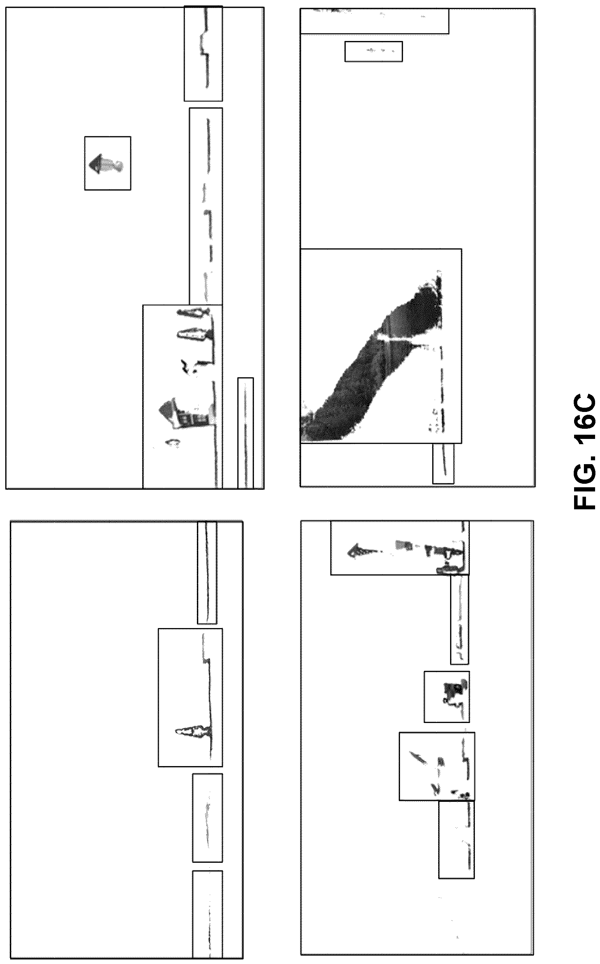

In another example, at least one layer is cropped (e.g., into a plurality of areas) and possibly re-organized (e.g., the areas are repositioned). In an example, at least two different areas that are kept after the cropping of one layer. The at least two areas are packed together and then the new gathered layer is considered to be packed in the tiled picture. For the MPI content "Train", a layer may be split into several cropped areas as illustrated in **FIG. 16A****.** On FIG. 16, 4 layers of the MPI content called "Train" are cropped in several areas that can be reorganized or gathered in a packed manner (cropped areas are represented by grey areas). **FIG.16B** illustrates the reorganization of one layer that has 5 areas. The reorganization is done in a way to limit the size of the reorganized area. The reorganized area is described as a rectangular shape.

The SEI message may thus be modified to comprise information on the cropped and/or subsampled layers. In an example, the SEI message may comprise a number of layers and, for each layer, a number of selected (e.g., cropped) areas, a size and an initial position and a reorganized position of each area in the layer and a position (e.g., a positioning) of the layer in the tiled picture. The reorganized position of an area is the position of this area in the reorganized layer. An example is provided in Table 7. The differences with the message of Table 1 are indicated in Italics.

**Table 7**

| | |
|---|---|
| multiplane_image_information( payloadSize ) { | **Descriptor** |
| | |
| **mpii_num_layers_minus1** | ue(v) |
| **mpii_layer_depth_equal_distance_flag** | u(1) |
| if( mpii_layer_depth_equal_distance_flag ) { | |
| depth_rep_info_element( ZNearSign, ZNearExp, ZNearMantissa, ZNearManLen ) | |
| depth_rep_info_element( ZFarSign, ZFarExp, ZFarMantissa, ZFarManLen ) | |
| } else | |
| for( i = 0; i < = mpii_num_layer_minus1; i++ ) | |
| depth_rep_info_element( ZSign[ i ], ZExp[ i ], ZMantissa[ i ], ZManLen[ i ] ) | |
| **mpii_texture_opacity_interleave flag** | u(1) |
| if( mpii_texture_opacity_interleave flag = = 0 ) | |
| **mpii_texture_opacity_arrangement_flag** /* 0: TaB, 1: SbS */ | u(1) |
| ***mpii_layer_cropping flag*** | u(1) |
| ***mpii_areas_layer_cropping flag*** | u(1) |
| *if( mpii_layer_cropping flag* = = *0)* | |
| **mpii_picture_num_layers_in_height_minus1** | ue(v) |
| *else* | |
| *for( i* = *0; i* < = *mpii_num*_*layer_minus1; i*++ *) {* | |
| *if( mpii_areas_layer_cropping flag* = = *1) {* | |
| *mpii_num_areas_layers_minus1[i]* | ue(v) |
| *for(j* = *0; j* < = *mpii_num_areas_layer_minus1; j*++*) {* | |
| ***mpii_cropped_areas_initialposition_inlayer_x[i][j]*** | ue(v) |
| ***mpii_cropped_areas_initialposition_inlayer_y[i][j]*** | ue(v) |
| ***mpii_cropped_size_areas_layer_x[i][j]*** | ue(v) |
| ***mpii_cropped_size_areas_layer_y[i][j]*** | ue(v) |
| ***mpii_cropped_areas_reorganizedposition_inlayer***_***x[i][j]*** | ue(v) |
| ***mpii_cropped_areas_reorganizedposition_inlayer_y[i][j]*** | ue(v) |
| ***}*** | |
| ***mpii_layer_position_intiled_picture_x[i]*** | ue(v) |
| ***mpii_layer_position_intiled_picture_y[i]*** | ue(v) |
| ***}*** | |
| *else* { | |
| ***mpii_cropped_position_inlayer_x[i]*** | ue(v) |
| ***mpii_cropped_position_inlayer_y[i]*** | ue(v) |
| ***mpii_cropped_size_layer_x[i]*** | |
| ***mpii_cropped_size_layer_y[i]*** | |
| ***mpii_layer_position_intiled_picture_x[i]*** | ue(v) |
| ***mpii_layer_psition_intiled_picture_y[i]*** | ue(v) |
| ***}*** | |
| } | |
| } | |

| | |
|---|---|
| mpii_layer cropping_flag equal to 0 indicates there is no layer cropped. mpii_layer cropping_flag equal to 1 indicates at least one layer is cropped and the size and the positioning of each layer is defined. mpii_area_layer cropping_flag equal to 0 indicates there is no layer cropped in several areas. mpii_area_layer cropping_flag equal to 1 indicates at least one layer is cropped into several areas and the size and the positioning of each layer is defined. mpii_num_areas_layers_minus1[i] plus 1 specifies the number of areas in the i-th layer for MPI representation. mpii_cropped_areas_initialposition_inlayer_x[i][j] specifies the initial position (e.g., defined in pixels) of the j-th areas in the i-th layer in horizontal dimension. mpii_cropped_areas_initialposition_inlayer_y[i][j] specifies the initial position (e.g., defined in pixels) of the j-th areas in the i-th layer in vertical dimension. mpii_cropped_areas_reorganizedposition_inlayer_x[i][j] specifies the position (e.g., defined in pixels) of the j-th areas in the i-th layer in horizontal dimension after the reorganization of the layer. mpii_cropped_areas_reorganizedposition_inlayer_y[i][j] specifies the position (e.g., defined in pixels) of the j-th areas in the i-th layer in vertical dimension after the reorganization of the layer. mpii_cropped_size_areas_layer_x[i][j] specifies the size in pixels of the j-th areas in the i-th layer in horizontal dimension. mpii_cropped_size_areas_layer_y[i][j] specifies the size in pixels of the j-th areas in the i-th layer in vertical dimension. mpii_cropped_size_layer_x[i] specifies the size in pixels of the i-th layer in horizontal dimension. mpii_cropped_size_layer_y[i] specifies the size in pixels of the i-th layer in vertical dimension. mpii_cropped_position_inlayer_x[i] specifies the position in pixels in the horizontal direction in the original layer of the i-th cropped layer. mpii_cropped_position_inlayer_y[i] specifies the position in pixels in the vertical direction in the original layer of the i-th cropped layer. mpii_layer_position_intiled_picture_x[i] specifies the position in horizontal of the top left corner of the i-th layer in the tiled picture. mpii_layer_position_intiled_picture_y[i] specifies the position in vertical of the top left corner of the i-th layer in the tiled picture. | |

In another example, at least one layer is sub-sampled and at least one layer is cropped and re-organized. It is proposed to reduce the size of at least one layer (e.g., one layer of lower interest) by applying a subsampling factor to this layer. It is also proposed to consider for one layer at least two different areas that are kept after the cropping. The at least two areas are packed together and then the new size of the gathered layer is considered to be packed in the tiled picture. For a given MPI content such as the content illustrated in **FIG.16C****,** each layer is split into several cropped areas and the first layer is also sub-sampled in both horizontal and vertical direction.

The SEI message may thus be modified to comprise information on the cropped and/or subsampled layers. In an example, the SEI message may comprise a number of layers and, for each layer: a subsampling factor of the layer, a number of selected (e.g., cropped) areas for each layer, a size and an initial and a reorganized position of each area in the layer and a position (e.g. a positioning) of the layer in the tiled picture. An example is provided in Table 8. The differences with the message of Table 1 are indicated in Italics.

**Table 8**

| | |
|---|---|
| multiplane_image_information( payloadSize ) { | **Descriptor** |
| | |
| **mpii_num_layers_minus1** | ue(v) |
| **mpii_layer_depth_equal_distance_flag** | u(1) |
| if( mpii_layer_depth_equal_distance_flag ) { | |
| depth_rep_info_element( ZNearSign, ZNearExp, ZNearMantissa, ZNearManLen ) | |
| depth_rep_info_element( ZFarSign, ZFarExp, ZFarMantissa, ZFarManLen ) | |
| } else | |
| for( i = 0; i < = mpii_num_layer_minus1; i++ ) | |
| depth_rep_info_element( ZSign[ i ], ZExp[ i ], ZMantissa[ i ], ZManLen[ i ] ) | |
| **mpii_texture_opacity_interleave flag** | u(1) |
| if( mpii_texture_opacity_interleave flag = = 0 ) | |
| **mpii_texture_opacity_arrangement_flag** /* 0: TaB, 1: SbS */ | u(1) |
| ***mpii_layer_cropping flag*** | u(1) |
| ***mpii_areas_layer_cropping flag*** | u(1) |
| ***mpii_layer_subsampling flag*** | u(1) |
| *if( (mpii_layer_cropping flag* = = *0)* & *(mpii_layer_subsampling* ==*0 ))* | |
| ***mpii_picture_num_layers_in_height_minus1*** | ue(v) |
| *Else if( (mpii_layer_cropping flag* = = *1) & (mpii_layer_subsampling* ==*0 ))* | |
| *for( i* = *0; i* < = *mpii_num*_*layer_minus1; i*++ *) {* | |
| *if( mpii_areas_layer_cropping flag* = = *1) {* | |
| *mpii_num_areas_layers_minus1[i]* | ue(v) |
| *for(j* = *0; j* < = *mpii_num_areas_layer_minus1; j*++*) {* | |
| ***mpii_cropped_areas_initialposition_inlayer_x[i][j]*** | ue(v) |
| ***mpii_cropped_areas_initialposition_inlayer_y[i][j]*** | ue(v) |
| ***mpii_cropped_size_areas_layer_x[i][j]*** | ue(v) |
| ***mpii_cropped_size_areas_layer_y[i][j]*** | ue(v) |
| ***mpii_cropped_areas_reorganizedposition_inlayer*_*x[i][j]*** | ue(v) |
| ***mpii_cropped_areas_reorganizedposition_inlayer_y[i][j]*** | ue(v) |
| ***}*** | |
| ***mpii_layer_position_intiled_picture_x[i]*** | ue(v) |
| ***mpii_layer_position_intiled_picture_y[i]*** | ue(v) |
| ***}*** | |
| *else* { | |
| ***mpii_cropped_position_inlayer_x[i]*** | ue(v) |
| ***mpii_cropped_position_inlayer_y[i]*** | ue(v) |
| ***mpii_cropped_size_layer_x[i]*** | |
| ***mpii_cropped_size_layer_y[i]*** | |
| ***mpii_layer_position_intiled_picture_x[i]*** | ue(v) |
| ***mpii_layer_position_intiled_picture_y[i]*** | ue(v) |
| ***}*** | |
| *Else if ((mpii_layer_cropping flag* == *0)* & *(mpii_layer_subsampling* ==*1 )) {* | |
| ***mpii_reference_size_layer_x*** | ue(v) |
| ***mpii_reference_size_layer_y*** | ue(v) |
| *for( i* = *0; i <* = *mpii_num*_*layer_minus1; i*++ *) {* | |
| ***mpii_subsampling_factor[i]*** | u(4) |
| ***mpii_layer_position_intiled_picture_x[i]*** | ue(v) |
| ***mpii_layer_position_intiled_picture_y[i] }*** | ue(v) |
| ***}*** | |
| *Else {* | |
| ***mpii_reference_size_layer_x*** | ue(v) |
| ***mpii_reference_size_layer_y*** | ue(v) |
| *for( i* = *0; i <* = *mpii_num*_*layer_minus1; i*++ *) {* | |
| ***mpii_subsampling_factor[i]*** | u(4) |
| *if( mpii_areas_layer_cropping flag* = = *1) {* | |
| *mpii_num_areas_layers_minus1[i]* | ue(v) |
| *for(j* = *0; j* < = *mpii_num_areas_layer_minus1; j*++*) {* | |
| ***mpii_cropped_areas_initialposition_inlayer_x[i][j]*** | ue(v) |
| ***mpii_cropped_areas_initialposition_inlayer_y[i][j]*** | ue(v) |
| ***mpii_cropped_size_areas_layer_x[i][j]*** | ue(v) |
| ***mpii_cropped_size_areas_layer_y[i][j]*** | ue(v) |
| ***mpii_cropped_areas_reorganizedposition_inlayer*_*x[i][j]*** | ue(v) |
| ***mpii_cropped_areas_reorganizedposition_inlayer_y[i][j]*** | ue(v) |
| ***}*** | |
| ***mpii_layer_position_intiled_picture_x[i]*** | ue(v) |
| ***mpii_layer_position_intiled_picture_y[i] }*** | ue(v) |
| ***}*** | |
| ***Else {*** | |
| ***mpii_reference_size_layer_x*** | ue(v) |
| ***mpii_reference_size_layer_y*** | ue(v) |
| *for( i* = *0; i* < = *mpii_num*_*layer_minus1; i*++ *) {* | |
| ***mpii_subsampling_factor[i]*** | u(4) |
| ***mpii_cropped_position_inlayer_x[i]*** | ue(v) |
| ***mpii_cropped_position_inlayer_y[i]*** | ue(v) |
| ***mpii_cropped_size_layer_x[i]*** | ue(v) |
| ***mpii_cropped_size_layer_y[i]*** | ue(v) |
| ***mpii_layer_position_intiled_picture_x[i]*** | ue(v) |
| ***mpii_layer_position_intiled_picture_y[i] }*** | ue(v) |
| ***}*** | |
| } | |

| | |
|---|---|
| mpii_layer subsampling_flag equal to 0 indicates there is no layer sub-sampled. mpii_layer subsampling_flag equal to 1 indicates at least one layer is subsampled by a factor defined for each layer. mpii_subsampling_factor[i] specifies the sub-sampling factor of the i-th layer. mpii_layer cropping_flag equal to 0 indicates there is no layer cropped. mpii_layer cropping _flag equal to 1 indicates at least one layer is cropped and the size and the positioning of each layer is defined. mpii_area_layer cropping_flag equal to 0 indicates there is no layer cropped in several areas. mpii_area_layer cropping_flag equal to 1 indicates at least one layer is cropped into several areas and the size and the positioning of each layer is defined. mpii_num_areas_layers_minus1[i] plus 1 specifies the number of areas in the i-th layer for MPI representation. mpii_cropped_areas_initialposition_inlayer_x[i][j] specifies the position in pixels of the j-th areas in the i-th layer in horizontal dimension. mpii_cropped_areas_initialposition_inlayer_y[i][j] specifies the position in pixels of the j-th areas in the i-th layer in vertical dimension. mpii_cropped_size_areas_layer_x[i][j] specifies the size in pixels of the j-th areas in the i-th layer in horizontal dimension. mpii_cropped_size_areas_layer_y[i][j] specifies the size in pixels of the j-th areas in the i-th layer in vertical dimension. mpii_cropped_areas_reorganizedposition_inlayer_x[i][j] specifies the position (e.g., defined in pixels) of the j-th areas in the i-th layer in horizontal dimension after the reorganization of the layer. mpii_cropped_areas_reorganizedposition_inlayer_y[i][j] specifies the position (e.g., defined in pixels) of the j-th areas in the i-th layer in vertical dimension after the reorganization of the layer. mpii_cropped_size_layer_x[i] specifies the size in pixels of the i-th layer in horizontal dimension. mpii_cropped_size_layer_y[i] specifies the size in pixels of the i-th layer in vertical dimension. mpii_cropped_position_inlayer_x[i] specifies the position in pixels in the horizontal direction in the original layer of the i-th cropped layer. mpii_cropped_position_inlayer_y[i] specifies the position in pixels in the vertical direction in the original layer of the i-th cropped layer. mpii_layer_position_intiled_picture_x[i] specifies the position in horizontal of the top left corner of the i-th layer in the tiled picture. mpii_layer_position_intiled_picture_y[i] specifies the position in vertical of the top left corner of the i-th layer in the tiled picture. | |

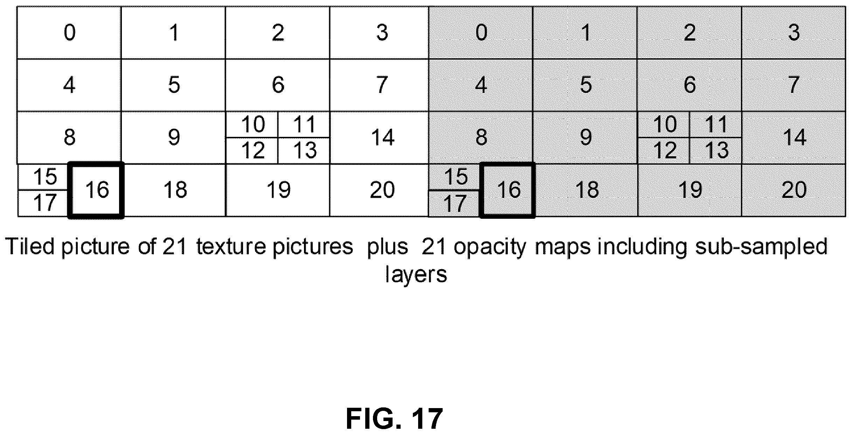

As mentioned above, it is possible to end-up with a tiled picture with empty space such as illustrated in FIG. 12 and FIG. 15A. In one example, empty spaces in the tiled picture may be implicitly filled, e.g., by adaptation of the subsampling factor. For example, in the case illustrated on FIG. 12, the layer 16 may be modified by sub-sampling only horizontally as illustrated in **FIG. 17****.** The layer 16 is implicitly chosen based on criteria such as the active pixel rate.

In another variant, not only the subsampling factor is implicitly modified but also the cropping operation to fill empty spaces. For example, in the case illustrated on FIG. 15, layers 16, 11 and 13 may be modified to fill the empty space. Layers 16, 11 and 13 are chosen based on criteria such as the active pixel rate in cropped areas.

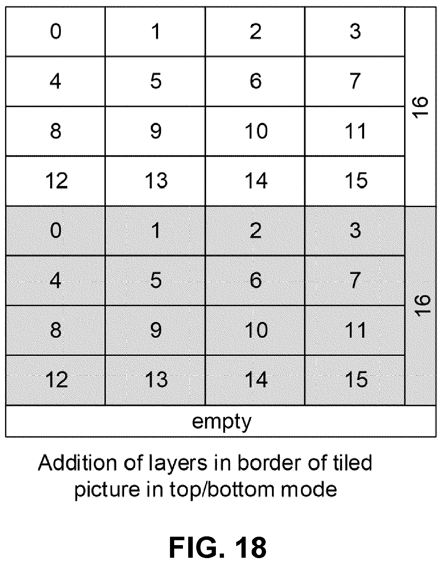

In another variant it is possible to end-up with a tiled picture with empty space at the right and bottom borders of width (W - ( Wlayer * wLayers ) ) and height (H - ( Hlayer * hLayers ) ) where Wayerand Hayer are layer dimensions in X and Y respectively and wlayers and hlayers are the number of layers in horizontal and vertical respectively. In one variant, the empty part are filled with layers of adapted shapes (dimensions), that is not larger than (W - ( Wlayer * wLayers )) and not higher than (H - ( Hlayer * hLayers )). This preferably applies when mpii_texture_opacity_arrangement_flag is equal to 1 (top/bottom mode of texture and opacity maps). **FIG. 18** illustrates this concept, where layer16 is inserted as a re-organized layer.

In case of fixed layer dimensions or when a reference size of a layer in pixels is defined (e.g., by default, i.e., a layer has this dimension), depending on the values of hLayers and the number of layers Nlayers, there may be less layers than the actual number of layers of the MPI representation. For instance, if number of layers of the MPI representation is 17 and hLayers is 4, wLayers is equal to 4, which leads to hLayers * wLayers = 16 layers, which is less than the number of layers which is equal to 17. To avoid this problem, several solutions may be considered.

In one example that may be combined with any of the previous examples, the computation of wLayers is modified as follows to ensure that wLayers*hLayers≥ mpii_num_layers_minus1. As an example, wLayers is set equal to (mpii_num_layers_minus1 + 1)* ((hLayers - 1 ) / hLayers). In another example that may be combined with any of the previous examples, hLayers and wLayers are defined in the syntax and Nlayers is derived as (hLayers * wLayers) with Nlayers >= mpii_num_layers_minus1. The SEI message may thus be modified as in Table 9. The differences with the message of Table 1 are indicated in Italics.

**Table 9**

| | |
|---|---|
| multiplane_image_information( payloadSize ) { | **Descriptor** |
| **mpii_picture_num_layers_in_height_minus1** | ue(v) |
| ***mpii_picture_num_layers_in_width_minus1*** | *ue(v)* |
| **mpii_layer_depth_equal_distance_flag** | u(1) |
| if( mpii_layer_depth**_**equal**_**distance_flag ) { | |
| depth_rep_info_element( ZNearSign, ZNearExp, ZNearMantissa, ZNearManLen ) | |
| depth_rep_info_element( ZFarSign, ZFarExp, ZFarMantissa, ZFarManLen ) | |
| } else | |
| for( i = 0; i < = mpii_num_layer_minus1; i++ ) | |
| depth_rep_info_element( ZSign[ i ], ZExp[ i ], ZMantissa[ i ], ZManLen[ i ] ) | |
| **mpii_texture_opacity_interleave flag** | u(1) |
| if( mpii_texture_opacity_interleave flag = = 0 ) | |
| **mpii_texture_opacity_arrangement_flag**/* 0: TaB, 1:SbS */ | u(1) |
| } | |

| | |
|---|---|
| A new syntax element, mpii_picture_num_layers_in_width_minus1 and mpii_picture_num_layers_in_height_minus1 are added. mpii_picture_num_layers_in_width_minus1 plus 1 specifies the number of spatially packed layers in width. mpii_picture_num_layers_in_height_minus1 plus 1 specifies the number of spatially packed layers in height. In this example, the former syntax element mpii_num_layers_minus1 is not encoded anymore. hLayers is computed as (mpii_picture_num_layers_in_height_minus1+1) and wLayers is computed as (mpii_picture_num_layers_in_width_minus1+1). | |

Moreover, the present aspects are not limited to ECM, VVC or HEVC, and can be applied, for example, to other standards and recommendations, and extensions of any such standards and recommendations. Unless indicated otherwise, or technically precluded, the aspects described in this application can be used individually or in combination.

Various numeric values are used in the present application. The specific values are for example purposes and the aspects described are not limited to these specific values.

Note that syntax elements as used herein, such as terms in equations and algorithms, signal (e.g., flag, mode) labels/names, etc., such as mpii_subsampling_factor[i], mpii_layer_position_x[i] and so on, are descriptive terms. As such, they do not preclude the use of other syntax element names.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, decode a packed multiplane image and information describing each layer of the packed multiplane image in terms of size and position in the packed picture.

As further examples, in one embodiment "decoding" refers only to entropy decoding, in another embodiment "decoding" refers only to differential decoding, and in another embodiment "decoding" refers to a combination of entropy decoding and differential decoding, and in another embodiment "decoding" refers to the whole reconstructing picture process including entropy decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application, for example, encode a packed multiplane image and information describing each layer of the packed multiplane image in terms of size and position in the packed picture.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

This disclosure has described various pieces of information, such as for example syntax, that can be transmitted or stored, for example. This information can be packaged or arranged in a variety of manners, including for example manners common in video standards such as putting the information into an SPS, a PPS, a NAL unit, a header (for example, a NAL unit header, or a slice header), or an SEI message. Other manners are also available, including for example manners common for system level or application level standards such as putting the information into one or more of the following:
a. SDP (session description protocol), a format for describing multimedia communication sessions for the purposes of session announcement and session invitation, for example as described in RFCs and used in conjunction with RTP (Real-time Transport Protocol) transmission.
b. DASH MPD (Media Presentation Description) Descriptors, for example as used in DASH and transmitted over HTTP, a Descriptor is associated with a Representation or collection of Representations to provide additional characteristic to the content Representation.
c. RTP header extensions, for example as used during RTP streaming.
d. ISO Base Media File Format, for example as used in OMAF and using boxes which are object-oriented building blocks defined by a unique type identifier and length also known as 'atoms' in some specifications.
e. HLS (HTTP live Streaming) manifest transmitted over HTTP. A manifest can be associated, for example, to a version or collection of versions of a content to provide characteristics of the version or collection of versions.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a particular one of a plurality of a sub-sampling factor, a size and a position of a cropped layer. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Many examples are described herein. Features of examples may be provided alone or in any combination, across various claim categories and types. Further, examples may include one or more of the features, devices, or aspects described herein, alone or in any combination, across various claim categories and types. For example, features described herein may be implemented in a bitstream or signal that includes information generated as described herein. The information may allow a decoder to decode a bitstream, the encoder, bitstream, and/or decoder according to any of the embodiments described. For example, features described herein may be implemented by creating and/or transmitting and/or receiving and/or decoding a bitstream or signal. For example, features described herein may be implemented a method, process, apparatus, medium storing instructions, medium storing data, or signal. For example, features described herein may be implemented by a TV, set-top box, cell phone, tablet, or other electronic device that performs decoding. The TV, set-top box, cell phone, tablet, or other electronic device may display (e.g. using a monitor, screen, or other type of display) a resulting image (e.g., an image from residual reconstruction of the video bitstream). The TV, set-top box, cell phone, tablet, or other electronic device may receive a signal including an encoded image and perform decoding.

A number of embodiments has been described above. Features of these embodiments can be provided alone or in any combination, across various claim categories and types.

A decoding method is disclosed that comprises :
decoding at least one picture (e.g., one tiled picture) comprising packed layers of a multiplane image representation wherein a size of at least one layer is reduced with respect to a reference size,
decoding information describing each layer in terms of size and position in the at least one picture; and
reconstructing a multiplane image representation comprising a plurality of layers based on the decoded at least one image and the decoded information.

In an example, decoding information describing each layer in terms of size and position in the at least one picture comprises decoding a supplemental enhancement information message comprising a reference size, a number of layers, and, for each layer, at least one sub-sampling factor and information representative of the position of the layer in the tiled picture.

In an example, the supplemental enhancement information message comprises a horizontal subsampling factor and a vertical subsampling factor.

In an example, decoding information describing each layer in terms of size and position in the at least one picture comprises decoding a supplemental enhancement information message comprising a number of layers and, for each layer, a size of the cropped layer, information representative of a position of the cropped layer in an original layer and a position of the cropped layer in the tiled picture.

In an example, decoding information describing each layer in terms of size and position in the at least one picture comprises decoding a supplemental enhancement information message comprising a number of layers, and, for each layer, one or two subsampling factors, a size of the cropped layer and information representative of a position of the cropped layer in an original layer and a position of the cropped layer in the tiled picture.

In an example, decoding information describing each layer in terms of size and position in the at least one picture comprises decoding a supplemental enhancement information message comprising a number of layers and, for each layer, a number of cropped areas, a size and information representative of a position of each area in an initial layer, information representative of a position of each area in a reorganized layer, and information representative of a position of the layer in the tiled picture.

In an example, the supplemental enhancement information supplemental enhancement information message comprises a syntax element indicating a number of spatially packed layers in height and a syntax element indicating a number of spatially packed layers in width.

An encoding method is disclosed that comprises :
obtaining a multiplane image representation comprising a plurality of layers ;
packing the plurality of layers into at least one picture (e.g., one tiled picture), wherein a size of at least one layer is reduced with respect to a reference size;
encoding at least one picture ; and
encoding information describing each layer in terms of size and position in the at least one picture.

In an example, encoding information describing each layer in terms of size and position in the at least one picture comprises encoding a supplemental enhancement information message comprising a reference size, a number of layers, and, for each layer, at least one sub-sampling factor and information representative of the position of the layer in the tiled picture.

In an example, the supplemental enhancement information message comprises a horizontal subsampling factor and a vertical subsampling factor.

In an example, encoding information describing each layer in terms of size and position in the at least one picture comprises encoding a supplemental enhancement information message comprising a number of layers and, for each layer, a size of the cropped layer, information representative of a position of the cropped layer in an original layer and a position of the cropped layer in the tiled picture.

In an example, encoding information describing each layer in terms of size and position in the at least one picture comprises encoding a supplemental enhancement information message comprising a number of layers, and, for each layer, one or two subsampling factors, a size of the cropped layer and information representative of a position of the cropped layer in an original layer and a position of the cropped layer in the tiled picture.

In an example, encoding information describing each layer in terms of size and position in the at least one picture comprises encoding a supplemental enhancement information message comprising a number of layers and, for each layer, a number of cropped areas, a size and information representative of a position of each area in an initial layer, information representative of a position of each area in a reorganized layer, and information representative of a position of the layer in the tiled picture.

In an example, the supplemental enhancement information supplemental enhancement information message comprises a syntax element indicating a number of spatially packed layers in height and a syntax element indicating a number of spatially packed layers in width.

In an example, a size of at least one layer is reduced with respect to a reference size by subsampling the at least one layer in a case where the at least one layer comprises a number of active pixels below a value.

In an example, a size of at least one layer is reduced with respect to a reference size by cropping the at least one layer to keep only at least one part of the layer with active pixels.

In an example, at least one empty part of the tiled picture is filled by implicitly or explicitly modifying the subsampling factor or the cropped area.

A decoding apparatus is disclosed that comprises one or more processors and at least one memory coupled to said one or more processors, wherein said one or more processors are configured to perform the decoding method.

An encoding apparatus disclosed that comprises one or more processors and at least one memory coupled to said one or more processors, wherein said one or more processors are configured to perform the encoding method.

## Claims

1. A decoding method comprising:
decoding at least one tiled picture comprising packed layers of a multiplane image representation wherein a size of at least one layer is reduced with respect to a reference size,
decoding information describing each layer in terms of size and position in the at least one tiled picture; and
reconstructing a multiplane image representation comprising a plurality of layers based on the decoded at least one tiled picture and the decoded information.

2. The method of claim 1, wherein decoding information describing each layer in terms of size and position in the tiled at least one picture comprises decoding a supplemental enhancement information message comprising a reference size, a number of layers, and, for each layer, at least one sub-sampling factor and information representative of the position of the layer in the tiled picture.

3. The method of claim 2, wherein the supplemental enhancement information message comprises a horizontal subsampling factor and a vertical subsampling factor.

4. The method of claim 1, wherein decoding information describing each layer in terms of size and position in the tiled at least one picture comprises decoding a supplemental enhancement information message comprising a number of layers and, for each layer, a size of a cropped layer, information representative of a position of the cropped layer in an original layer and a position of the cropped layer in the tiled picture.

5. The method of claim 1, wherein decoding information describing each layer in terms of size and position in the tiled at least one picture comprises decoding a supplemental enhancement information message comprising a number of layers, and, for each layer, one or two subsampling factors, a size of a cropped layer and information representative of a position of the cropped layer in an original layer and a position of the cropped layer in the tiled picture.

6. The method of claim 1, wherein decoding information describing each layer in terms of size and position in the tiled at least one picture comprises decoding a supplemental enhancement information message comprising a number of layers and, for each layer, a number of cropped areas, a size and information representative of a position of each area in an initial layer, information representative of a position of each area in a reorganized layer, and information representative of a position of the layer in the tiled picture.

7. The method of any one of claims 2-6, wherein the supplemental enhancement information message comprises a syntax element indicating a number of spatially packed layers in height and a syntax element indicating a number of spatially packed layers in width.

8. An encoding method comprising:
obtaining a multiplane image representation comprising a plurality of layers;
packing the plurality of layers into at least one tiled picture, wherein a size of at least one layer is reduced with respect to a reference size;
encoding at least one picture; and
encoding information describing each layer in terms of size and position in the at least one picture.

9. The method of claim 8, wherein encoding information describing each layer in terms of size and position in the at least one picture comprises encoding a supplemental enhancement information message comprising a reference size, a number of layers, and, for each layer, at least one sub-sampling factor and information representative of the position of the layer in the tiled picture.

10. The method of claim 9, wherein the supplemental enhancement information message comprises a horizontal subsampling factor and a vertical subsampling factor.

11. The method of claim 8, wherein encoding information describing each layer in terms of size and position in the at least one picture comprises encoding a supplemental enhancement information message comprising a number of layers and, for each layer, a size of a cropped layer, information representative of a position of the cropped layer in an original layer and a position of the cropped layer in the tiled picture.

12. The method of claim 8, wherein encoding information describing each layer in terms of size and position in the at least one picture comprises encoding a supplemental enhancement information message comprising a number of layers, and, for each layer, one or two subsampling factors, a size of a cropped layer and information representative of a position of the cropped layer in an original layer and a position of the cropped layer in the tiled picture.

13. The method of claim 8, wherein encoding information describing each layer in terms of size and position in the at least one picture comprises encoding a supplemental enhancement information message comprising a number of layers and, for each layer, a number of cropped areas, a size and information representative of a position of each area in an initial layer, information representative of a position of each area in a reorganized layer, and information representative of a position of the layer in the tiled picture.

14. A decoding apparatus comprising one or more processors and at least one memory coupled to said one or more processors, wherein said one or more processors are configured to perform the method of any one of claims 1-7.

15. An encoding apparatus comprising one or more processors and at least one memory coupled to said one or more processors, wherein said one or more processors are configured to perform the method of any one of claims 8-13.
